# EUROPÄISCHE PATENTANMELDUNG

(11) **EP 3 603 871 A1**
(43) Veröffentlichungstag der Anmeldung: **05.02.2020**
(21) Anmeldenummer: 18186214.5
(22) Anmeldetag: 30.07.2018
(51) Int. Cl.: B23K 26/06, B23K 26/073, B23K 26/12, B23K 26/082, B23K 26/352

(54) **VORRICHTUNG UND VERFAHREN ZUM BEARBEITEN EINES WERKSTÜCKES MITTELS LASERSTRAHLUNG**

(71) Anmelder: Clean Lasersysteme GmbH, 52134 Herzogenrath (DE)
(72) Erfinder: Barkhausen, Winfried, 52074 Aachen (DE); Büchter, Edwin, 52134 Herzogenrath (DE)
(74) Vertreter: Müller & Schubert

(57) **Zusammenfassung**

Die vorliegende Erfindung betrifft eine Bearbeitungsvorrichtung (10) sowie ein Verfahren für die Bearbeitung eines Werkstücks (100) mittels Laserstrahlung, aufweisend wenigstens eine Erzeugungseinrichtung (11) zum Erzeugen von Laserstrahlen (50), eine der wenigstens einen Erzeugungseinrichtung (11) zugeordnete Einstrahleinrichtung (30) zum Einstrahlen der erzeugten Laserstrahlen (50) aus mehreren unterschiedlichen Einstrahlrichtungen in eine Bearbeitungszone (36), welche zur Aufnahme des zu bearbeitenden Werkstücks (100) ausgebildet ist, wobei die Einstrahleinrichtung (30) bereitgestellt ist, dass der Fokus (35) der aus den unterschiedlichen Einstrahlrichtungen eingestrahlten Laserstrahlen (50) in einer Fokuszone (37) liegt, welche mit der Bearbeitungszone (36) korrespondiert. Es ist weiter vorgesehen, dass die Einstrahleinrichtung (30) eine Anzahl von Spiegeln (31, 32, 33, 34) aufweist, welche zur Einstrahlung der Laserstrahlen (50) in den unterschiedlichen Einstrahlrichtungen bereitgestellt sind, dass die Spiegel (31, 32, 33, 34) im Strahlweg der Laserstrahlen (50) zwischen einem Austrittspunkt (18) der Laserstrahlen (50) aus der wenigstes einen Erzeugungseinrichtung (11) und dem Fokus (35) der Laserstrahlen (50) angeordnet sind, dass die wenigstens eine Erzeugungseinrichtung (11) ausgebildet ist, um die erzeugten Laserstrahlen (50) wahlweise oder in einer vorgegebenen Bearbeitungsreigenfoige über die Spiegel (31, 32, 33, 34) in die Bearbeitungszone (36) einzustrahlen, und dass bevorzugt der Strahlweg der Laserstrahlen (50) zwischen dem Austrittspunkt (18) der Laserstrahlen (50) über jeden der Spiegel (31, 32, 33, 34) zum Fokus (35) der Laserstrahlen (50) gleich lang ist.

## Beschreibung

Die vorliegende Erfindung betrifft zunächst eine Bearbeitungsvorrichtung zum Bearbeiten eines Werkstücks mittels Laserstrahlung gemäß dem Oberbegriff von Patentanspruch 1. Weiterhin betrifft die Erfindung auch ein Verfahren zum Bearbeiten eines Werkstücks mittels Laserstrahlung.

Die Bearbeitung von Werkstücken unter Zuhilfenahme von Laserstrahlung ist bereits seit langem bekannt und erfolgt auf unterschiedlichste Weise. Neben der Reinigung von Oberflächen ist ein breites Anwendungsfeld die Bearbeitung von Oberflächen.

Dabei wird es zunehmend erforderlich, Werkstücke auch im kontinuierlichen Betrieb zu bearbeiten. Zu denken ist beispielsweise an das Entlacken von Drähten. Mit der zunehmenden Elektromobilität beispielsweise werden zunehmend lackierte Drähte eingesetzt, die an bestimmten Stellen entlackt werden müssen. Dafür eignet sich die Laserbearbeitung. Mittels der Laserstrahlung wird der Lack an den vorgesehenen Stellen vom Draht entfernt. Dies kann besonders vorteilhaft im so genannten Durchlaufverfahren realisiert werden, bei dem der Draht kontinuierlich durch eine Laser-Bearbeitungsvorrichtung hindurchgeführt und an den jeweiligen vorgesehenen Stellen mittels Laserstrahlung entlackt wird.

Eine Herausforderung für diese Art der Bearbeitung stellt die Vorgabe dar, dass der Draht allseitig und gleichmäßig vom Lack befreit werden muss, so dass die Laserstrahlung von mehreren Seiten auf den Draht eingestrahlt werden muss. Eine ähnliche Problematik ergibt sich oftmals auch beim Laserschweißen oder Laserlöten. In der DE 100 20 327 A1, von der die vorliegende Erfindung ausgeht, ist eine Laser-Bearbeitungsvorrichtung beschrieben, mittles derer unter Verwendung von Laserstrahlung geschweißt oder gehärtet wird. Insbesondere sollen rotationssymmetrische Werkstücke allseitig bearbeitet werden. Dies wird durch eine ringförmige Fokussierung erreicht. Dabei wird eine Anzahl von Lasern an einem ringförmigen Bauelement angeordnet. Die einzelnen Laser strahlen das erzeugte Laserlicht radial nach innen in das Zentrum des ringförmigen Bauelements ab. Im Zentrum des ringförmigen Bauelements befindet sich auch die Bearbeitungszone, in der das zu bearbeitende rotationssymmetrische Werkstück positioniert ist. Der Fokus der einzelnen Laser liegt dabei jeweils in der Bearbeitungszone, so dass die Oberfläche des rotationssymmetrischen Werkstücks von den verschiedenen Lasern allseitig gleichmäßig bearbeitet wird.

Nachteilig bei dieser Lösung ist, dass eine Mehrzahl von voneinander unabhängigen Lasern verwendet wird. Diese müssen allesamt so positioniert werden, dass deren Fokuslänge stets gleich ist. Dabei muss jeder Laser einzeln fokussiert werden. Die bekannte Lösung ist somit aufwändig und teuer. Und wenn Werkstücke mit unterschiedlichen Geometrien bearbeitet werden sollen, ist der Aufwand sehr hoch, die einzelnen Laser erneut korrekt zu positionieren und einzustellen.

Ausgehend vom genannten Stand der Technik liegt der vorliegenden Erfindung daher die Aufgabe zugrunde, die Bearbeitungsvorrichtung der eingangs genannten Art derart weiterzubilden, dass die zuvor beschriebenen Nachteile vermieden werden können. Insbesondere soll es ermöglicht werden, mit einer minimalen Anzahl von Erzeugungseinrichtungen zum Erzeugen von Laserstrahlen ein Werkstück allseitig und gleichmäßig bearbeiten zu können. Weiterhin soll ein entsprechend verbessertes Bearbeitungsverfahren bereitgestellt werden.

Diese Aufgabe wird erfindungsgemäß gelöst durch die Vorrichtung zum Bearbeiten eines Werkstücks mittels Laserstrahlung mit den Merkmalen gemäß des unabhängigen Patentanspruchs 1, bei der es sich um den ersten Erfindungsaspekt handelt, sowie durch das Verfahren zum Bearbeiten eines Werkstücks mittels Laserstrahlung mit den Merkmalen gemäß des unabhängigen Patentanspruchs 13, bei dem es sich um den zweiten Erfindungsaspekt handelt. Weitere Merkmale und Details der vorliegenden Erfindung ergeben sich aus den Unteransprüchen, der Beschreibung sowie den Zeichnungen. Merkmale und Details, die hinsichtlich des ersten Erfindungsaspekts beschrieben sind, gelten dabei vollumfänglich selbstverständlich auch hinsichtlich des zweiten Erfindungsaspekts, so dass hinsichtlich der Offenbarung eines Erfindungsaspekts stets vollinhaltlich auch auf den anderen Erfindungsaspekt Bezug genommen und verwiesen wird.

Ein grundlegendes Merkmal der vorliegenden Erfindung, die in den nachfolgend im Detail beschriebenen unterschiedlichen Erfindungsaspekten realisiert ist, besteht darin, dass einer minimalen Anzahl von Erzeugungseinrichtungen zur Erzeugung von Laserstrahlen eine Anzahl von Spiegeln zugeordnet wird. Die von der Erzeugungseinrichtung erzeugten Laserstrahlen werden über die verschiedenen, der Erzeugungseinrichtung zugeordneten Spiegel in eine Bearbeitungszone der Bearbeitungsvorrichtung eingestrahlt, wobei durch die Anordnung der Spiegel die von der Erzeugungseinrichtung erzeugten Laserstrahlen aus unterschiedlichen Einstrahlrichtungen in die Bearbeitungszone eingestrahlt werden, so dass insbesondere eine allseitige Bestrahlung eines in der Bearbeitungszone platzierten Werkstücks mit Laserlicht erreicht wird. Dabei kann insbesondere auch der Strahlweg eines jeden Laserstrahls von der Erzeugungseinrichtung bis hin zum Auftreffpunkt des Laserstrahls auf der Oberfläche des zu bearbeitenden Werkstücks, was insbesondere dem Fokus des Laserstrahls entspricht, individuell und unabhängig von den anderen Laserstrahlen eingestellt werden, insbesondere in Bezug auf die Strahlweglänge, die Position des Auftreffpunkts und die Strahlparameter der Laserstrahlen. Neben der Bearbeitung von rotationssymmetrischen Werkstücken kann die Erfindung deshalb auch für die Bearbeitung von profilierten und/oder asymmetrischen Werkstücken eingesetzt werden.

Wie dies im Einzelnen realisiert werden kann, wird nachfolgend anhand vorteilhafter Ausgestaltungen und Ausführungsformen in größerem Detail beschrieben.

Gemäß dem ersten Aspekt der Erfindung wird eine Bearbeitungsvorrichtung für die Bearbeitung eines Werkstücks mittels Laserstrahlung bereitgestellt, welche die Merkmale des unabhängigen Patentanspruchs 1 aufweist.

Mit der Bearbeitungsvorrichtung werden Werkstücke bearbeitet. Dabei ist die Erfindung grundsätzlich nicht auf bestimmte Werkstückarten und Werkstücktypen beschränkt. Bevorzugt werden mit der Bearbeitungsvorrichtung rotationssymmetrische Werkstücke wie Drähte, Rohre und dergleichen bearbeitet. Jedoch können in gleicher Weise auch rechteckige, quadratische oder anders ausgebildete, insbesondere auch profilierte und/oder asymmetrische, Werkstücke, bei denen es sich beispielsweis um Langprofilelemente handeln kann, bearbeitet werden. Die vorgenannten Werkstücke eignen sich besonders für eine durchgängige, kontinuierliche oder für eine getaktete Bearbeitung. Natürlich ist die Erfindung auch für andere Werkstückformen einsetzbar, die sich insbesondere allseitig, bearbeiten lassen. Ebenso kann die Erfindung auch für die stationäre Bearbeitung von Werkstücken eingesetzt werden.

Weiterhin ist die Erfindung auch nicht auf eine bestimmte Art der Bearbeitung beschränkt. So kann es sich bei der Bearbeitung um jede Form der Oberflächenbearbeitung handeln, etwa ein Entschichten, ein Entlacken, ein Vorbehandeln, ein Härten, ein Aufschweißen, ein Nachbearbeiten von Schweißnähten oder Lötstellen, ein Anlassen, ein Strukturieren, ein Markieren, ein Reinigen oder dergleichen. In einer bevorzugten Ausführungsform wird die Bearbeitungsvorrichtung zum Bearbeiten von Draht, insbesondere zum partiellen Bearbeiten von Draht, etwa einem Entlacken von lackiertem Draht, etwa Kupferdraht, eingesetzt. Gemäß einer anderen bevorzugten Ausführungsform wird die Bearbeitungsvorrichtung zum Vorbehandeln eines Werkstücks, insbesondere eines Drahtes, für eine spätere Beschichtung eingesetzt.

Die Bearbeitung des Werkstücks erfolgt erfindungsgemäß mittels Laserstrahlung. Zu diesem Zweck weist die Bearbeitungsvorrichtung wenigstens eine Erzeugungseinrichtung zum Erzeugen von Laserstrahlen auf. Die Erzeugungseinrichtung, wie weiter unten näher beschrieben ist, hat die Funktion, die für die Bearbeitung des Werkstücks erforderliche Laserstrahlung zu erzeugen und in der für die Bearbeitung des Werkstücks erforderlichen Weise bereitzustellen.

Für die Erfindung ausreichend ist es, wenn die Bearbeitungsvorrichtung eine einzige Erzeugungseinrichtung zum Erzeugen von Laserstrahlen aufweist. In einer bevorzugten Ausführungsform ist deshalb realisiert, dass die Bearbeitungsvorrichtung eine einzige Erzeugungseinrichtung zum Erzeugen von Laserstrahlen aufweist. Natürlich kann die Bearbeitungsvorrichtung auch zwei oder mehr Erzeugungseinrichtungen zum Erzeugen von Laserstrahlen aufweisen. In einer anderen bevorzugten Ausführungsform weist die Bearbeitungsvorrichtung zwei solcher Erzeugungsvorrichtungen zum Erzeugen von Laserstrahlen auf. Die Verwendung von mehr als einer Erzeugungseinrichtung hat den Vorteil, dass damit die Bearbeitungszeit verkürzt werden kann. Werden zwei Erzeugungseinrichtungen verwendet, können diese beispielsweise an sich gegenüberliegenden Positionen in der Bearbeitungseinrichtung angeordnet oder vorgesehen sein. In anderer Ausgestaltung können die Erzeugungseinrichtungen auch in einer Reihe hintereinander in der Bearbeitungsvorrichtung angeordnet oder vorgesehen sein.

Je nach Ausgestaltung weist die Erzeugungseinrichtung für die Erzeugung der Laserstrahlen eine Anzahl verschiedener Komponenten auf.

Eine Grundkomponente der Erzeugungseinrichtung stellt dabei eine Laserquelle zur Erzeugung der Laserstrahlen dar. In einer bevorzugten Ausführungsform ist die Laserquelle als eine so genannte gepulste Laserquelle ausgebildet, was bedeutet, dass damit eine gepulste Laserstrahlung in Form von Laserpulsen erzeugt wird. Natürlich ist die Erfindung auch mit anderen Typen von Laserquellen realisierbar, mit einer Laserquelle in Form eines Festkörperlasers zum Beispiel. Aus diesem Grund ist die Erfindung nicht auf bestimmte Typen von Laserquellen beschränkt.

Bei einer weiteren Komponente der Erzeugungseinrichtung für die Laserstrahlen handelt es sich beispielsweise um eine Scannereinrichtung. Die Scannereinrichtung ist in Strahlrichtung der erzeugten Laserstrahlen bevorzugt der Laserquelle nachgeordnet. In der Scannereinrichtung, die dem Fachmann an sich bekannt ist, so dass auf deren Funktionsweise an dieser Stelle nicht im Detail eingegangen werden muss, werden die von der Laserquelle erzeugten Laserstrahlen abgelenkt, so das verschiedene Bereiche des Werkstücks bearbeitet werden können. Die Scannereinrichtung weist grundsätzlich einen Scankopf, in dem die erzeugten Laserstrahlen abgelenkt werden, und eine Steuereinrichtung auf. Mittels der Steuereinrichtung werden insbesondere entsprechende Steuersignale und Steuerbefehle an den Scankopf abgegeben, mittels derer die erzeugten Laserstrahlen in durch die Steuersignale und Steuerbefehle vorgegebener Weise abgelenkt werden. Mittels der Scannereinrichtung wird somit ein Arbeitsfeld generiert, das auch als Scanfeld bezeichnet wird. Durch das Arbeitsfeld wird der mögliche zu bearbeitende Bereich des Werkstücks festgelegt. Das Arbeitsfeld umfasst somit den zu bearbeitenden Bereich des Werkstücks.

Die Austrittsposition des Laserstrahls aus der Scannereinrichtung bestimmt insbesondere den Strahlweg der Laserstrahlen innerhalb der Bearbeitungsvorrichtung und damit die Auftreffposition des Laserstrahls innerhalb der Bearbeitungsvorrichtung, was weiter unten in größerem Detail beschrieben wird.

Der Scannereinrichtung ist optional in Strahlrichtung der erzeugten Laserstrahlen ein Objektivelement, vorzugsweise mit wenigstens einer Fokussierlinse, und/oder eine Fokussiereinrichtung nachgeordnet. In einer anderen Ausführungsform sind die vorgenannten Elemente in Strahlrichtung der Laserstrahlen vor der Scannereinrichtung angeordnet. Die vorgenannten Elemente können auch Bestandteil der Scannereinrichtung sein. In anderer Ausgestaltung weist die Erzeugungseinrichtung bevorzugt eine Zoomeinrichtung und/oder eine Einrichtung zu Verändern der Brennweite der Laserstrahlen auf. Diese Komponenten können beispielsweise Bestandteil der Scannereinrichtung oder des Objektivelements sein.

Weitere Komponenten der Erzeugungseinrichtung können ein Modul zum Ablenken des erzeugten Laserlichts in Z-Richtung sein, da mit der Scannereinrichtung in erster Linie eine Ablenkung der Laserstrahlen in X-Richtung und Y-Richtung erfolgt. Weiterhin kann die Erzeugungseinrichtung für die Erzeugung der Laserstrahlen weitergehende Komponenten aufweisen, was dem Fachmann an sich geläufig ist.

Erfindungsgemäß weist die Bearbeitungsvorrichtung eine der wenigstens einen Erzeugungseinrichtung zugeordnete Einstrahleinrichtung auf, die zum Einstrahlen der erzeugten Laserstrahlen aus mehreren unterschiedlichen Einstrahlrichtungen in eine Bearbeitungszone der Bearbeitungsvorrichtung ausgebildet ist. Die Einstrahleinrichtung ist in Strahlrichtung der erzeugten Laserstrahlen der Erzeugungseinrichtung nachgeordnet. Sie weist insbesondere diejenigen Komponenten der Bearbeitungsvorrichtung auf, die erforderlich sind, um die in der Erzeugungseinrichtung erzeugten Laserstrahlen, die die Erzeugungseinrichtung an einem Austrittspunkt derselben verlassen, innerhalb der Bearbeitungsvorrichtung in die Bearbeitungszone zu lenken, wo die Laserstrahlen zur Bearbeitung des in der Bearbeitungszone befindlichen Werkstücks verwendet werden. Das in der Bearbeitungsvorrichtung zu bearbeitende Werkstück wird in der Bearbeitungszone positioniert und dort im Betriebszustand der Bearbeitungsvorrichtung bearbeitet.

Über die Einstrahleinrichtung, die im Folgenden im Detail beschrieben wird, werden die von der Erzeugungseinrichtung erzeugten Laserstrahlen aus mehreren Einstrahirichtungen in die Bearbeitungszone eingestrahlt, so dass ein in der Bearbeitungszone platziertes Werkstück von mehreren Seiten, vorzugsweise allseitig, mit den Laserstrahlen bestrahlt wird beziehungsweise werden kann.

Damit dies in einer gleichmäßigen Weise geschieht, ist die Einstrahleinrichtung in einer Weise bereitgestellt, dass der Fokus der aus den unterschiedlichen Einstrahlrichtungen eingestrahlten Laserstrahlen in einer Fokuszone liegt, welche mit der Bearbeitungszone korrespondiert. Die Fokuszone ist dabei insbesondere ein abgeschlossener, begrenzter Bereich, in dem die einzelnen aus den verschiedenen Einstrahlrichtungen eingestrahlten Laserstrahlen fokussiert sind. Ein Korrespondieren der Fokuszone mit der Bearbeitungszone bedeutet insbesondere, dass diese beiden Zonen miteinander in Beziehung stehen. Bevorzugt ist, wenn die beiden Zonen zusammenfallen. Das Zusammenfallen der beiden Zonen kann bedeuten, dass beide Zonen gleich dimensioniert sind, so dass in diesem Fall die Fokuszone der Bearbeitungszone entspricht. In anderer Ausgestaltung kann die Bearbeitungszone im Vergleich zur Fokuszone größer dimensioniert sein. In diesem Fall ist die Fokuszone innerhalb der Bearbeitungszone ausgebildet, insbesondere um das Zentrum der Bearbeitungszone herum. Beispielsweise kann die Fokuszone punktförmig oder linienförmig, insbesondere axial in Richtung des Werkstücks ausgebildet sein, vorzugsweise genau im Zentrum der Bearbeitungszone. In diesem Fall sind alle über die verschiedenen Einstrahlrichtungen eingestrahlten Laserstrahlen in der als Fokuspunkt oder Fokuslinie ausgebildeten Fokuszone fokussiert. In anderer bevorzugter Ausgestaltung ist die Fokuszone ringförmig oder zylinderförmig, insbesondere axial in Richtung des Werkstücks ausgebildet. Ein ringförmiger oder zylinderförmiger Fokus ist insbesondere für die Bearbeitung von rotationssymmetrischen Werkstücken wie Drähten, Rohren und dergleichen geeignet, da sich hier die zu bearbeitende Werkstückoberfläche nicht im Zentrum der Bearbeitungszone befindet. Bevorzugt entspricht die Fokuszone von ihrer Dimensionierung her der Dimensionierung der Oberfläche des zu bearbeitenden Werkstücks. In diesem Fall sind die Laserstrahlen, insbesondere deren Strahlwege, durch die Erzeugungseinrichtung, insbesondere durch die weiter oben beschriebenen Komponenten der Erzeugungseinrichtung, so eingestellt, dass der Fokus der einzelnen Laserstrahlen auf der Oberfläche des zu bearbeitenden Werkstücks liegt. Da die Fokuszone mit der Bearbeitungszone korrespondiert, ist erfindungsgemäß realisiert, dass die einzelnen Laserstrahlen, die aus den verschiedenen Einstrahlrichtungen auf das zu bearbeitende Werkstück eingestrahlt werden, auf der Oberfläche des Werkstücks fokussiert werden beziehungsweise sind. Üblicherweise tritt der Laserstrahl kegelförmig aus der Erzeugungseinrichtung aus, wird gebündelt und hat seinen dünnsten Punkt, den man Fokus nennt oder auch als Brennpunkt bezeichnet, in der Fokuszone, vorzugsweise aber nicht notwendigerweise auf der Oberfläche des zu bearbeitenden Werkstücks.

Erfindungsgemäß ist die Einstrahleinrichtung in besonderer Weise ausgestaltet. Die Einstrahleinrichtung weist eine Anzahl von Spiegeln auf, welche zur Einstrahlung der Laserstrahlen in den unterschiedlichen Einstrahlrichtungen bereitgestellt sind. Dies geschieht insbesondere in einer Weise, dass die in der Erzeugungseinrichtung erzeugten Laserstrahlen beim Austritt aus der Erzeugungseinrichtung so abgelenkt werden, dass sie auf die verschiedenen Spiegel auftreffen und von dort in Richtung des zu bearbeitenden Werkstücks reflektiert werden, so dass die Laserstrahlen aus verschiedenen Einstrahlrichtungen in die Bearbeitungszone beziehungsweise auf das zu bearbeitende Werkstück eingestrahlt werden. Wenn die Erzeugungseinrichtung eine Scannereinrichtung aufweist, bestimmt die Austrittsposition des Laserstrahls aus der Scannereinrichtung, hervorgerufen durch eine entsprechende Ablenkung in der Scannereinrichtung, den Strahlweg der Laserstrahlen und damit den Auftreffort, beispielsweise die Auftreffseite beziehungsweise den entsprechenden Spiegel, insbesondere die Spiegelfläche des entsprechenden Spiegels. Vorteilhaft bei einer solchen Vorgehensweise ist insbesondere, dass ein Wechsel des Auftrefforts, beispielsweise ein Wechsel der Seiten, instantan und nahezu ohne Zeitverlust, beispielsweise bei einer Positioniergeschwindigkeit von größer 1m/s, vorzugsweise größer 10m/s, erfolgt.

Bevorzugt weist die Bearbeitungsvorrichtung ein definiertes Arbeitsfeld auf, insbesondere ein rautenförmiges oder elliptisches oder rechteckiges Arbeitsfeld, wobei die Erfindung nicht auf diese Art von Arbeitsfeldern beschränkt ist. Derartige Arbeitsfelder werden in der Figurenbeschreibung weiter unten näher erläutert, so dass an dieser Stelle insbesondere auch auf die entsprechenden Ausführungen weiter unten vollinhaltlich Bezug genommen wird. Das Arbeitsfeld wird mittles der Erzeugungseinrichtung, insbesondere durch die Scannereinrichtung, und optional auch mittels der Spiegel, festgelegt.

Bevorzugt sind die Spiegel außenliegend zur Bearbeitungszone in der Bearbeitungsvorrichtung angeordnet, so dass ein Werkstück, welches sich in der Bearbeitungszone befindet, von den einzelnen Spiegeln der Einstrahleinrichtung umgeben ist. Die Spiegel befinden sich somit außerhalb der Bearbeitungszone und sind insbesondere um die Bearbeitungszone herum angeordnet. Insbesondere sind die Spiegel radial außenliegend zur Bearbeitungszone in der Bearbeitungsvorrichtung angeordnet.

Die vorliegende Erfindung ist nicht auf eine bestimmte Anzahl von Spiegeln beschränkt. Die Anzahl der Spiegel hängt insbesondere von der Anzahl der zu realisierenden unterschiedlichen Einstrahlrichtungen der Laserstrahlen ab. Bevorzugt ist über jeweils einen Spiegel eine bestimmte Einstrahlrichtung der Laserstrahlen in die Bearbeitungszone und insbesondere auf das zu bearbeitende Werkstück realisiert.

In einer bevorzugten Ausführungsform weist die Einstrahleinrichtung vier Spiegel zum Einstrahlen der erzeugten Laserstrahlen aus vier unterschiedlichen Einstrahlrichtungen in die Bearbeitungszone auf.

In einer bevorzugten Ausführungsform sind zwei oder mehr Spiegel, vorzugsweise vier Spiegel, jeweils einer Erzeugungseinrichtung zugeordnet. Mittels der Erzeugungseinrichtung und einer entsprechenden Ablenkung der erzeugten Laserstrahlen in der Erzeugungseinrichtung werden die erzeugten Laserstrahlen nach dem Austritt aus der Erzeugungseinrichtung wahlweise oder in einer bestimmten Reihenfolge auf die der Erzeugungseinrichtung zugeordneten Spiegel gelenkt beziehungsweise gestrahlt, und von dort in Richtung der Bearbeitungszone reflektiert. Die Ablenkung der Laserstrahlen auf den jeweiligen Spiegel erfolgt bevorzugt in der Scannereinrichtung. Das heißt, mit einer Erzeugungseinrichtung können Laserstrahlen aus so vielen verschiedenen Einstrahlrichtungen in die Bearbeitungszone eingestrahlt werden, wie Spiegel der jeweiligen Erzeugungseinrichtung zugeordnet sind. Die Zuordnung der Spiegel zur Erzeugungseinrichtung bedeutet insbesondere, dass es sich bei den betreffenden Spiegeln um diejenigen Spiegel handelt, auf weiche die von der dazugehörigen Erzeugungseinrichtung erzeugten Laserstrahlen gelenkt werden. Das können je nach Ausgestaltung alle Spiegel der Einstrahleinrichtung sein, oder aber nur eine Teilmenge aller Spiegel der Einstrahleinrichtung.

Hierzu werden nachfolgend bevorzugte Ausführungsbeispiele beschrieben, bei der eine oder mehrere Erzeugungseinrichtungen zur Erzeugung von Laserstrahlen zum Einsatz kommen.

In einer ersten bevorzugten Ausführungsform weist die Bearbeitungsvorrichtung eine einzige Erzeugungseinrichtung auf, wobei alle Spiegel der Einstrahleinrichtung der Erzeugungseinrichtung zugeordnet sind. Das bedeutet, dass die von der Erzeugungsvorrichtung erzeugten Laserstrahlen, insbesondere durch eine entsprechende Ablenkung, auf alle Spiegel gerichtet und von diesen in Richtung der Bearbeitungszone reflektiert werden. Damit kann das in der Bearbeitungszone befindliche Werkstück aus verschiedenen Einstrahlrichtungen, die durch die entsprechenden Spiegel vorgegeben sind, vorzugsweise allseitig, mit Laserstrahlen bestrahlt und entsprechend bearbeitet werden. In einer bevorzugten Ausführungsform sind der einzigen Erzeugungseinrichtung vier Spiegel zugeordnet, in deren Zentrum sich die Bearbeitungszone mit dem darin zu platzierenden oder platzierten Werkstück befindet. Die Erzeugungseinrichtung erzeugt insbesondere ein elliptisches oder rautenförmiges oder rechteckiges Arbeitsfeld.

In einer anderen Ausführungsform weist die Bearbeitungsvorrichtung zwei Erzeugungseinrichtungen auf, wobei jeder Erzeugungseinrichtung jeweils eine Teilanzahl der Spiegel, beispielsweise jeweils zwei Spiegel, zugeordnet ist/sind. Die einzelnen Spiegel sind in allen Fällen im Strahlweg der Laserstrahlen zwischen einem Austrittspunkt der Laserstrahlen aus der wenigstens einen Erzeugungseinrichtung und dem Fokus der Laserstrahlen angeordnet. Der Austrittspunkt der Laserstrahlen befindet sich insbesondere dort, wo die Laserstrahlen die Erzeugungseinrichtung verlassen, Wenn die Erzeugungseinrichtung eine Scannereinrichtung aufweist, befindet sich der Austrittspunkt dort, wo die Laserstrahlen die Scannereinrichtung verlassen. Wenn die Erzeugungseinrichtung zusätzlich oder alternativ ein Objektivelement aufweist, befindet sich der Austrittspunkt am Ausgang des Objektivelements.

Erfindungsgemäß ist die wenigstens eine Erzeugungseinrichtung in einer Weise ausgebildet, dass sie in der Lage ist, die erzeugten Laserstrahlen wahlweise oder in einer vorgegebenen Bearbeitungsreigenfolge über die Spiegel in die Bearbeitungszone einzustrahlen. In einer bevorzugten Ausführungsform werden die erzeugten Laserstrahlen nacheinander über die verschiedenen Spiegel in die Bearbeitungszone eingestrahlt. Die Bearbeitungsvorrichtung weist bevorzugt eine Steuereinrichtung auf, die derart bereitgestellt ist, dass sie in der Lage ist, die Strahlparameter der erzeugten Laserstrahlen und/oder die Einstrahlparameter der einzelnen Spiegel zum Einstrahlen der Laserstrahlen in die Bearbeitungszone individuell und jeweils unabhängig von den anderen Laserstrahlen und Spiegeln zu beeinflussen und einzustellen. Diese Steuereinrichtung kann mit der weiter oben beschriebenen Steuereinrichtung der Scannereinrichtung zusammengefasst sein.

Wenn in einer bevorzugten Ausführungsform vier Spiegel vorhanden sind, sind diese bevorzugt gleichmäßig verteilt um die Bearbeitungszone herum angeordnet. In einer bevorzugten Ausführungsform befindet sich, vom Werkstück aus gesehen, ein erster Spiegel oben rechts, ein zweiter Spiegel unten rechts, ein dritter Spiegel unten links und ein vierter Spiegel oben links. Die erzeugten Laserstrahlen werden in einer bestimmten Reihgenfolge nacheinander auf die verschiedenen Spiegel gerichtet und von dort in Richtung der Bearbeitungszone und das darin befindliche zu bearbeitende Werkstück reflektiert. Die dafür erforderliche Ablenkung der Laserstrahlen erfolgt bevorzugt in der Scannereinrichtung der Erzeugungseinrichtung. In einer bevorzugten Ausgestaltung werden die Laserstrahlen in der vorstehend genannten Nummerierung der Spiegel nacheinander in der Reihenfolge erster Spiegel, zweiter Spiegel, dritter Spiegel, vierter Spiegel auf die Spiegel gelenkt. Andere bevorzugte Strahlreihenfolgen auf die verschiedenen Spiegel werden im Zusammenhang mit der Figurenbeschreibung weiter unten beschrieben, so dass an dieser Stelle auch auf die entsprechenden Ausführungen weiter unten vollinhaltlich Bezug genommen wird.

Bevorzugt wird die gesamte Spiegellänge, das ist die nutzbare Bearbeitungslänge des Spiegels, in Vorschubrichtung des zu bearbeitenden Werkstücks mit einem definierten Arbeitsfeld genutzt, welches insbesondere eine elliptische oder rautenförmige oder rechteckige Form aufweist.

Bevorzugt sind die Position und die Größe der Spiegel in Abhängigkeit der Bearbeitungsreihenfolge so gewählt, dass die Spiegelfläche minimiert ist, was insbesondere zu einer Kostenreduktion führt.

Bevorzugt ist ferner, dass die Spiegelfläche der einzelnen Spiegel das insbesondere rautenförmige oder elliptische oder rechteckiges Arbeitsfeld optimal ausnutzt, so dass in Längsrichtung des Arbeitsfeldes die Bearbeitung unterbrechungsfrei auf einer maximalen Länge ausgeführt wird oder werden kann.

Durch die erfindungsgemäße Ausgestaltung der Bearbeitungsvorrichtung ist es ermöglicht, dass die Laserstrahlen aus verschiedenen Einstrahlrichtungen auf das zu bearbeitende Werkstück eingestrahlt werden, so dass das Werkstück insbesondere allseitig bearbeitet werden kann. Durch die Möglichkeit, dass jeder Laserstrahl individuell eingestellt werden kann, ist insbesondere realisierbar, dass jeder Laserstrahl, der aus einer bestimmten Einstrahlrichtung auf das zu bearbeitende Werkstück trifft, eine individuelle und zu den anderen Laserstrahlen, die aus anderen Einstrahlrichtungen auf das Werkstück treffen, verschiedene Strahlcharakteristik aufweist. Insbesondere kann auf diese Weise realisiert werden, dass zumindest einzelne Laserstrahlen einen unterschiedlich langen Strahlweg zwischen dem Austrittspunkt der Laserstrahlen aus der Erzeugungseinrichtung und deren Fokus aufweisen. Dadurch lassen sich insbesondere Werkstücke mit nicht gleichmäßigen Oberflächen und Konturen bearbeiten.

In einer bevorzugten Ausführungsform ist realisiert, dass der Strahlweg aller Laserstrahlen zwischen dem Austrittspunkt der Laserstrahlen über jeden der Spiegel zum Fokus der Laserstrahlen aus den verschiedenen Einstrahlrichtungen jeweils gleich lang ist. Dadurch ist sichergestellt, dass der Fokus der einzelnen Laserstrahlen, die vom Austrittspunkt der Erzeugungseinrichtung über die jeweiligen Spiegel in die Fokuszone, und damit in die Bearbeitungszone laufen, allesamt in der Fokuszone, insbesondere auch auf der Oberfläche des in der Bearbeitungszone befindlichen Werkstücks, beispielsweise ringförmig bei rotationssymmetrischen Werkstücken, fokussiert wird beziehungsweise ist.

Insbesondere dann, wenn sich die einzelnen Spiegel in unterschiedlichem Abstand von dem Austrittspunkt der Erzeugungseinrichtung befinden, was insbesondere der Fall ist, wenn sämtliche Spiegel einer einzigen Erzeugungseinrichtung zugeordnet sind, wird es erforderlich, den Strahlweg der Laserstrahlen über diejenigen Spiegel, die dem Austrittspunkt näher liegen, in geeigneter Weise zu verlängern, damit diese Strahlwege die gleiche Länge haben wie diejenigen Strahlwege über diejenigen Spiegel die vom Austrittspunkt weiter entfernt liegen.

Dies ist bevorzugt dadurch realisiert, dass in wenigstens einem Strahlweg der Laserstrahlen zwischen dem Austrittspunkt der Laserstrahlen über den Spiegel zum Fokus der Laserstrahlen vor dem Spiegel wenigstens ein Weg-Kompensationselement angeordnet ist. Das Weg-Kompensationselement korrespondiert dann mit dem entsprechenden dazugehörigen Spiegel. Entweder ist in jedem Strahlweg eines Laserstrahls, in dem dies erforderlich ist, wenigstens ein solches Weg-Kompensationselement angeordnet. Oder aber ein gemeinsames Weg-Kompensationselement kann für mehrere unterschiedliche Laserstrahlen gemeinsam genutzt werden-Durch ein solches Weg-Kompensationselement kann insbesondere die Fokussierlänge der entsprechenden Laserstrahlen durch eine Weg-Kompensationsumlenkung kompensiert werden. Bei einem solchen Weg-Kompensationselement handelt es sich bevorzugt um einen Weg-Kompensationsspiegel, der die Strahlwege der Laserstrahlen gleich macht. In einer bevorzugten Ausführungsform handelt es sich bei dem Weg-Kompensationselement um ein dreieckiges Weg-Kompensationselement. In einer bevorzugten Ausführungsform wird das Weg-Kompensationselement durch zwei Spiegel gebildet, die auf den Schenkeln eines dreieckigen Basiskörpers angeordnet sind, oder die in Richtung zweier Schenkel eines Dreiecks ausgerichtet sind. In einer anderen Ausführungsform ist das Weg-Kompensationselement als ein dreieckiges Prisma ausgebildet. In einem solchen Fall kann ein einziges Weg-Kompensationselement genutzt werden, um einen vom Austrittspunkt der Erzeugungseinrichtung austretenden Laserstrahl je nach Bedarf in zwei unterschiedliche Richtungen abzulenken, je nachdem, auf welche Seitenfläche des Weg-Kompensationselements der Laserstrahl auftrifft.

Die Länge des Weg-Kompensationselements entspricht dabei bevorzugt der Länge der korrespondierenden Spiegel. Bevorzugt liegt das Weg-Kompensationselement auf der Mittelachse des Arbeitsfeldes.

Bevorzugt sind zumindest einzelne Spiegel fest oder einstellbar beweglich in der Bearbeitungsvorrichtung angeordnet. Wenn die Spiegel, insbesondere über die weiter oben beschriebene Steuereinrichtung, einstellbar beweglich sind, können diese bevorzugt einzeln und unabhängig voneinander beweglich sein. Die Bewegung der Spiegel kann manuell oder automatisch erfolgen. Bevorzugt ist vorgesehen, dass die Spiegel in Winkel und/oder Position einstellbar sind. Natürlich sind auch Kombinationen, beispielsweise von festen und von einstellbar beweglichen Spiegeln von der Erfindung mitumfasst.

Bevorzugt ist die wenigstens eine Erzeugungseinrichtung ausgebildet, dass sie in der Lage ist, die Länge des Arbeitsbereichs in der Bearbeitungszone einzustellen, vorzugsweise in einem Bereich zwischen 10 mm und 500 mm.

Alternativ oder zusätzlich ist die wenigstens eine Erzeugungseinrichtung für eine Variation der Brennweite ausgebildet, um den Fokusabstand der Laserstrahlen zwischen dem Austrittspunkt und der Fokuszone zu verstellen. Beispielsweise kann die Erzeugungseinrichtung zum Verändern des Fokusabstands in einem Bereich zwischen 100 mm und 500 mm ausgebildet sein. Bevorzugt kann die Erzeugungseinrichtung derart bereitgestellt sein, dass damit die Strahlweglänge der Laserstrahlen, insbesondere mittels der Steuereinrichtung, bei Bedarf veränderbar ist beziehungsweise verändert werden kann, beispielsweise um bis zu +/-20% der Strahlweglänge. Damit kann beispielsweise auf unterschiedliche Dicken im zu bearbeitenden Werkstück reagiert werden, ohne dass eine Veränderung der Spiegel erforderlich wird. Die Veränderung der Strahlweglänge kann insbesondere für jeden Spiegel individuell einstellbar sein.

Mittels einer wie weiter oben beschriebenen Fokuseinrichtung ist insbesondere eine Fokus-Verstellung möglich. Damit kann der Strahlweg der erzeugten Laserstrahlen im Fokusabtsand variiert werden beispielsweise um bis zu +/- 20%. Damit kann für jeden Laserstrahl aus den verschiedenen Einstrahlrichtungen, insbesondere individuell, der optimale Abstand zur Oberfläche des zu bearbeitenden Werkstücks eingestellt werden. Damit können insbesondere Geometrieschwankungen im Werkstück ausgeglichen werden.

Alternativ oder zusätzlich ist die wenigstens eine Erzeugungseinrichtung ausgebildet, um den Verlauf der erzeugten Laserstrahlen innerhalb der Einstrahleinrichtung in der X-Richtung und/oder der Y-Richtung und/oder der Z-Richtung zu verändern. Bevorzugt ist die Bearbeitungsvorrichtung für eine statische Bearbeitung des Werkstücks oder für eine Bearbeitung des Werkstücks im Durchlauf ausgebildet. Im letztgenannten Fall kann das Werkstück, beispielsweise ein Draht oder ein Rohr, kontinuierlich durch die Bearbeitungsvorrichtung hindurchgeführt werden und dabei während des Durchlaufs in entsprechender Weise bearbeitet werden. Vorzugsweise wird die Vorschubgeschwindigkeit des Werkstücks so gewählt, dass in Abhängigkeit der Relativbewegung zwischen dem Werkstück und der Erzeugungseinrichtung, insbesondere einer Scannereinrichtung und/oder eines Objektivelements, eine Kompensation der Relativbewegung mit Hilfe der Erzeugungseinrichtung, insbesondere der Scannereinrichtung, vorgenommen wird oder werden kann. Damit lässt sich insbesondere das Ziel einer gleichmäßigen Verteilung der Laserstrahlung auf der Oberfläche des zu bearbeitenden Werkstücks realisieren. In anderer Ausgestaltung ist die Bearbeitungsvorrichtung für eine getaktete Bearbeitung ausgebildet.

In einer bevorzugten Ausgestaltung weist die Bearbeitungsvorrichtung eine Absaugvorrichtung auf. Die Absaugvorrichtung ist derart bereitgestellt, dass sie in der Lage ist, mittels der Laserstrahlen vom zu bearbeitenden Werkstück abgelöste Partikel abzusaugen. Bei der Absaugvorrichtung handelt es sich insbesondere um eine in der Bearbeitungsvorrichtung integrierte Absaugvorrichtung. Die Absaugvorrichtung hat insbesondere die Aufgabe, die Spiegel von Dreck freizuhalten. Die Absaugvorrichtung ist dabei insbesondere in solch einer Weise bereitgestellt, dass damit eine Absaugung vorzugsweise in axialer Richtung des Werkstücks, bei kontinuierlicher Bearbeitung eines rotationssymmetrischen Werkstücks, etwa eines Drahtes oder Rohres, in oder gegen dessen Vorschubrichtung oder auch senkrecht zur Vorschubrichtung, erfolgt oder erfolgen kann. Damit wird insbesondere eine gleichmäßige Überströmung, insbesondere der Spiegel erreicht. In einer bevorzugten Ausführungsform weist die Absaugvorrichtung wenigstens ein integriertes Absaugrohr auf, welches konzentrisch um die Bearbeitungszone herum angeordnet ist und mit seitlichen Aussparungen für die Spiegel beziehungsweise Aperturen für den Eintritt der Laserstrahlen in die Bearbeitungszone versehen ist. Hiermit ist eine Optimierung der Luftführung für die Erfassung der Abtragpartikel sowie die Reinhaltung der Spiegel möglich.

In weiterer bevorzugter Ausgestaltung weist die Bearbeitungsvorrichtung eine Schutzvorrichtung für die Spiegel auf. Beispielsweise handelt es sich bei der Schutzvorrichtung insbesondere um ein vor dem Spiegel platziertes Schutzglas. Die Schutzvorrichtung weist bevorzugt eine Anzahl solcher Schutzgläser auf, wobei die Anzahl der Schutzgläser der Anzahl der Spiegel entspricht, und wobei jedem Spiegel ein Schutzglas zugeordnet ist. Das Schutzglas kann bevorzugt wechselbar, beispielsweise steckbar, vor dem dazugehörigen Spiegel angeordnet sein. In einer anderen Ausführungsform ist die Schutzvorrichtung als Einrichtung zur Erzeugung von Druckluft ausgebildet. In einem solchen Fall ist der Spiegelschutz bevorzugt über eine oder mehrere Druckluftdüsen realisiert. Bevorzugt wird der Spiegel, beziehungsweise die zu schützende Spiegelfläche, oder ein vor dem Spiegel befindliches Schutzglas, dabei von der Druckluft laminar überströmt, vorzugsweise aber nicht notwendigerweise senkrecht zur Vorschubrichtung. In einer bevorzugten Ausführungsform besteht die Schutzvorrichtung aus einer Kombination von einem oder mehreren Schutzgläsern und einer Einrichtung zur Erzeugung von Druckluft.

Die einzelnen Bestandteile der Einstrahlvorrichtung, insbesondere die verschiedenen Spiegel, die Absaugvorrichtung und die Schutzvorrichtung sind bevorzugt innerhalb eines Gehäuses angeordnet. Wird ein Werkstück kontinuierlich im Durchlauf bearbeitet, wird dieses bevorzugt durch das Gehäuse hindurchgeführt, wobei die Bearbeitung innerhalb des Gehäuses erfolgt. Die einzelnen Spiegel sind zur vereinfachten Montage bevorzugt an oder in einer dafür vorgesehen Spiegelkassette montiert, so dass die Spiegel insbesondere vormontiert werden sonnen.

Gemäß dem zweiten Aspekt der Erfindung wird ein Verfahren zur Bearbeitung eines Werkstücks mittels Laserstrahlung bereitgestellt, welches die Merkmale des unabhängigen Patentanspruchs 13 aufweist. Während der Bearbeitung ist das Werkstück in einer Bearbeitungszone einer Bearbeitungsvorrichtung aufgenommen. Bevorzugt wird das Verfahren unter Verwendung einer Bearbeitungsvorrichtung gemäß dem ersten Erfindungsaspekt durchgeführt, so dass hinsichtlich der Durchführung des Verfahrens und dessen Funktionsweise vollinhaltlich auch auf die vorstehenden Ausführungen zum ersten Erfindungsaspekt vollinhaltlich Bezug genommen und verwiesen wird.

Das Verfahren ist gekennzeichnet durch folgende Schritte. Über wenigstens eine Erzeugungseinrichtung der Bearbeitungsvorrichtung werden zunächst Laserstrahlen erzeugt. Die erzeugten Laserstrahlen werden über wenigstens eine der wenigstens einen Erzeugungseinrichtung zugeordnete Einstrahleinrichtung, welche eine Anzahl von Spiegeln aufweist, aus mehreren unterschiedlichen Einstrahlrichtungen wahlweise oder in einer vorgegebenen Bearbeitungsreihenfolge über die Spiegel in die Bearbeitungszone eingestrahlt und in einer Fokuszone, die mit der Bearbeitungszone korrespondiert, fokussiert. Bevorzugt werden die erzeugten Laserstrahlen nacheinander über unterschiedliche Spiegel in die Bearbeitungszone eingestrahlt. Die Spiegel sind im Strahlweg der Laserstrahlen zwischen dem Austrittspunkt der Laserstrahlen aus der wenigstens einen Erzeugungseinrichtung und dem Fokus der Laserstrahlen angeordnet. Bevorzugt wird in jeder Einstrahlrichtung der Strahlweg der Laserstrahlen zwischen dem Austrittspunkt der Laserstrahlen über jeden der Spiegel zum Fokus der Laserstrahlen gleich lang eingestellt. Die Laserstrahlen treffen auf der Oberfläche eines in der Bearbeitungszone platzierten zu bearbeitenden Werkstücks auf. Die Bearbeitung des Werkstücks erfolgt mittels dieser auf dem Werkstück auftreffenden Laserstrahlen.

Bevorzugt werden die Laserstrahlen in wenigstens einer Erzeugungseinrichtung erzeugt und in einer festgelegten Reihenfolge nacheinander auf die verschiedenen Spiegel gelenkt. Von dort werden die Laserstrahlen in Richtung der Bearbeitungszone reflektiert und treffen dort auf das zu bearbeitende Werkstück auf. Durch die entsprechende Ausgestaltung der Strahlwege, die alle gleich lang sind, ist sichergestellt, dass alle Laserstrahlen auf der Oberfläche des Werkstücks fokussiert sind, was im Zusammenhang mit der Bearbeitungsvorrichtung im Rahmen von deren Funktionsweise weiter oben beschrieben ist, so dass auf die entsprechenden Ausführungen weiter oben Bezug genommen wird. Dort, wo es erforderlich ist, wird ein Laserstrahl über ein geeignetes Weg-Kompensationselement gelenkt, damit alle Strahlwege der Laserstrahlen über die verschiedenen Spiegel gegebenenfalls gleich lang einstellbar beziehungsweise eingestellt sind. Jeder Spiegel wird bevorzugt einzeln eingestellt, beispielsweise hinsichtlich seiner Position und/oder seines Winkels. Jeder Laserstrahl, der über einen der Spiegel in die Bearbeitungszone mit dem zu bearbeitenden Werkstück eingestrahlt wird, wird bevorzugt hinsichtlich seiner Strahlparameter individuell und unabhängig von anderen Laserstrahlen aus anderen Einstrahlrichtungen eingestellt und beeinflusst. Vorzugsweise wird die Vorschubgeschwindigkeit des Werkstücks so gewählt, dass in Abhängigkeit der Relativbewegung zwischen dem Werkstück und der Erzeugungseinrichtung, insbesondere einer Scannereinrichtung und/oder eines Objektivelements, eine Kompensation der Relativbewegung mit Hilfe der Erzeugungseinrichtung, insbesondere der Scannereinrichtung, vorgenommen wird oder werden kann.

Mit dem erfindungsgemäßen Verfahren lässt sich insbesondere eine allseitige Bearbeitung des Werkstücks realisieren.

In einer bevorzugten Ausführungsform erfolgt mit dem Verfahren eine stationäre Bearbeitung des in der Bearbeitungsvorrichtung befindlichen Werkstücks. In einem solchen Fall ist das Werkstück, beispielsweise ein Draht, stillstehend. Die von der Erzeugungseinrichtung erzeugten Laserstrahlen werden nacheinander aus unterschiedlichen Einstrahlrichtungen eingestrahlt. Bevorzugt werden die einzelnen Laserstrahlen zyklisch angesteuert, so dass immer nur Laserstrahlen aus einer Einstrahlrichtung gleichzeitig auf das Bauteil einwirken. Nachdem die Bearbeitung aus allen Einstrahlrichtungen vollständig erfolgt ist, wird das Werkstück aus der Bearbeitungszone entfernt, oder aber um die Länge der Bearbeitung nach vorne getaktet. Für die erneute Bearbeitung ist es dann wieder angehalten.

In einer anderen bevorzugten Ausführungsform erfolgt mit dem Verfahren eine kontinuierliche Bearbeitung des in der Bearbeitungsvorrichtung befindlichen Werkstücks. Dabei lässt sich insbesondere eine kontinuierliche Bearbeitung des Werkstücks im Durchlauf realisieren, was auch als "On The Fly"-Bearbeitung bezeichnet wird. Das bedeutet, dass das Werkstück, beispielsweise ein rotationssymmetrisches Werkstück, etwa in Form eines Drahtes oder Rohres, kontinuierlich durch die Bearbeitungsvorrichtung hindurchgeführt wird. Während sich das Werkstück innerhalb der Bearbeitungsvorrichtung befindet, wird das Werkstück mittels der Laserstrahlung bearbeitet. Bevorzugt werden dabei die erzeugten Laserstrahlen von der Erzeugungseinrichtung auf die verschiedenen Spiegel gelenkt und von dort, aus verschiedenen Richtungen, beispielsweise allseitig auf das zu bearbeitende Werkstück eingestrahlt.

In einer bevorzugten Ausführungsform erfolgt eine kontinuierliche Bearbeitung des Werkstücks mit folgenden Schritten: Das Werkstück, beispielsweise ein Draht, wird mit gleichbleibender Geschwindigkeit kontinuierlich durch die Bearbeitungsvorrichtung gefördert. Die Laserstrahlen wirken zunächst aus einer ersten Einstrahlrichtung ein und bearbeiten dort, insbesondere auf voller, das heißt auf größtmöglicher Bearbeitungslänge. Nachdem das entsprechende Werkstücksegment mit Laserstrahlen, insbesondere komplett, bearbeitet ist, wird die Bearbeitung auf Laserstrahlen aus einer nächsten, zweiten Einstrahlrichtung umgeschaltet. Die Laserstrahlen wirken aus der zweiten Einstrahlrichtung auf das zu bearbeitende Werkstück ein und die Bestrahlung wird anschließend fortgeführt, bis die komplette Oberfläche, beispielsweise der Außenumfang des Werkstücks aus den unterschiedlichen Einstrahlrichtungen einmal bearbeitet wurde. Bei mehreren, insbesondere vier, Spiegeln bedeutet dies, dass eine entsprechende Bestrahlung noch aus wenigstens einer weiteren, insbesondere einer dritten und einer vierten, Einstrahlrichtung erfolgt. Die Vorschubgeschwindigkeit des Werkstücks wird bevorzugt exakt so eingestellt, dass dieses für einen "kompletten Umlauf", das heißt eine vollständige Laserbearbeitung aus allen Einstrahrichtungen, genau um die, insbesondere eingestellte, Bearbeitungslänge der Erzeugungseinrichtung weiter transportiert wird. Diese Bearbeitung wird auch "On-The-Fly" genannt und erlaubt insbesondere eine vollflächige Bearbeitung ohne zwischenzeitliches Anstoppen des Werkstücks. Hierdurch Entfallen unproduktive Nebenzeiten.

Die Erfindung wird nachfolgend anhand von Ausführungsbeispielen unter Bezugnahme auf die beiliegenden Zeichnungen in größerem Detail beschrieben. Es zeigen
- Figur 1: eine erste Ausführungsform einer Bearbeitungsvorrichtung gemäß der vorliegenden Erfindung;
- Figur 2: eine zweite Ausführungsform einer Bearbeitungsvorrichtung gemäß der vorliegenden Erfindung;
- Figur 3: Konturen verschiedenartig ausgebildete Arbeitsfelder;
- Figur 4: eine perspektivische Ansicht einer Einstrahleinrichtung der erfindungsgemäßen Bearbeitungsvorrichtung;
- Figur 5: die Draufsicht auf die einzelnen Komponenten der Einstrahleinrichtung der erfindungsgemäßen Bearbeitungsvorrichtung;
- Figuren 6 bis 9: verschiedene Strahlwege der Laserstrahlen über verschiedene Spiegel der erfindungsgemäßen Bearbeitungsvorrichtung;
- Figur 10: in einer einzigen Darstellung zusammengefasst die in den Figuren 5 bis 8 separat dargestellten Strahlwege der Laserstrahlen;
- Figur 11: den Ablauf des erfindungsgemäßen Verfahrens bei einer stationären Bearbeitung eines Werkstücks; und
- Figuren 12 bis 19: den Ablauf des erfindungsgemäßen Verfahrens bei einer kontinuierlichen Bearbeitung eines Werkstücks.

In den verschiedenen Figuren ist eine Bearbeitungsvorrichtung 10 dargestellt, mittels derer ein Werkstück, beispielsweise ein rotationssymmetrischer Werkstück, beispielsweise in Form eines Drahtes 100, im Durchlauf, das heißt kontinuierlich mittels Laserstrahlung bearbeitet werden kann. Beispielsweise kann der Draht 100 entlackt werden. Dazu wird der Draht 100 in einer Vorschubrichtung 101 durch die Bearbeitungsvorrichtung 10 hindurchgeführt und innerhalb der Bearbeitungsvorrichtung 10 bearbeitet.

Auch wenn in der folgenden Figurenbeschreibung die Erfindung anhand der Bearbeitung eines Drahtes exemplarisch verdeutlicht wird, so sei an dieser Stelle darauf hingewiesen, dass die Erfindung auch für andere Werkstückformen und Werkstückgeometrien einsetzbar ist. In einer bevorzugten Ausführungsform wird die Erfindung im Zusammenhang mit der Bearbeitung langgestreckter Werkstücke eingesetzt, da hier insbesondere ein kontinuierlicher Durchlauf möglich ist. Langgestreckte Werkstücke haben eine Länge, die um ein Vielfaches größer ist als deren Breite, Dicke, Durchmesser oder Tiefe. Beispiele solch langgestreckter Werkstücke sind rotationssymmetrische Werkstücke, die beispielsweise wie geschildert als Draht oder Rohr vorliegen können.

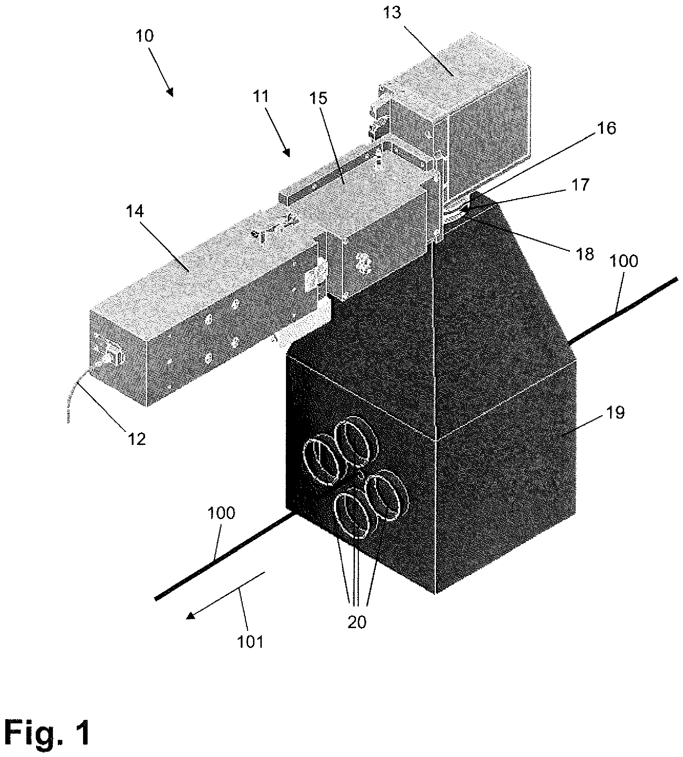

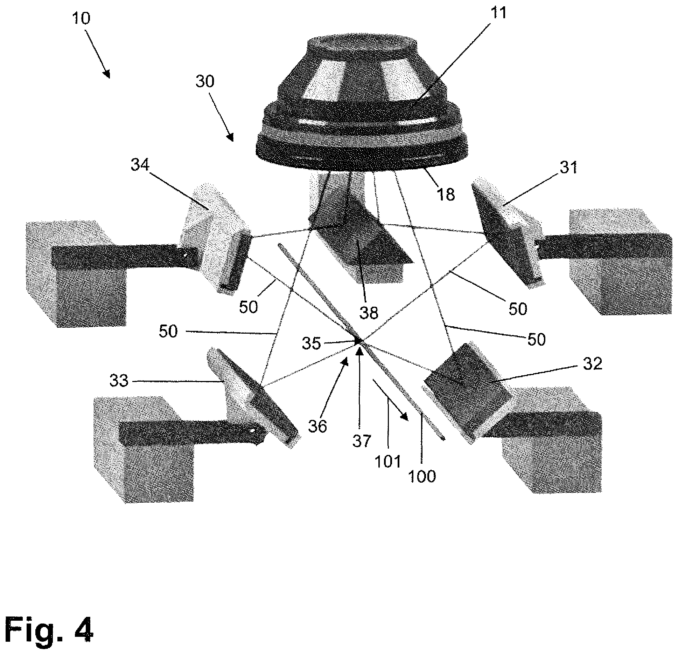

In der Figur 1 ist ein erstes Ausführungsbeispiel einer erfindungsgemäßen Bearbeitungsvorrichtung 10 dargestellt. Die Bearbeitungsvorrichtung 10 weist zunächst eine einzige Erzeugungseinrichtung 11 auf, mittels derer Laserstrahlen für die Bearbeitung des Drahtes 100 erzeugt werden. Die Erzeugungseinrichtung 11 verfügt über eine Laserquelle, mittels derer vorzugsweise eine gepulste Laserstrahlung erzeugt wird. In der Figur 1 ist lediglich ein Teil 12 der Laserquelle in Form eines Lichtleiters dargestellt. Weiterhin verfügt die Erzeugungseinrichtung 11 über eine Scannereinrichtung 13, mittels derer die erzeugten Laserstrahlen abgelenkt werden. Zwischen der Laserquelle 12 und der Scannereinrichtung 13 befindet sich noch ein Modul 15 zur Ablenkung des Laserstrahls in Z-Richtung sowie eine Lasermimik 14 mit weiteren Komponenten. In Strahlrichtung der erzeugten Laserstrahlen der Scannereinrichtung 13 nachgeordnet befindet sich ein Objektivelement 16 mit einer Fokussierlinse. Die Ausgangsseite 17 des Objektivelements 16 bildet den Austrittspunkt 18 der erzeugten Laserstrahlen aus der Erzeugungseinrichtung 11. Die erzeugten Laserstrahlen werden über das Objektivelement 16 in ein Gehäuse 19 der Bearbeitungsvorrichtung 10 gelenkt. In dem Gehäuse 19 befindet sich die Einstrahleinrichtung der Bearbeitungsvorrichtung 10, welche im Zusammenhang mit den Figuren 4 bis 10 weiter unten im Detail beschrieben wird. In dem Gehäuse 19 befinden sich verschiedene Anschlüsse 20 für eine Absaugvorrichtung, mittels derer abgelöste Partikel des bearbeiteten Drahtes 100 abgesaugt werden. Der Draht 100 wird in Vorschubrichtung 101 durch das Gehäuse 19 der Bearbeitungsvorrichtung 10 hindurchgeführt.

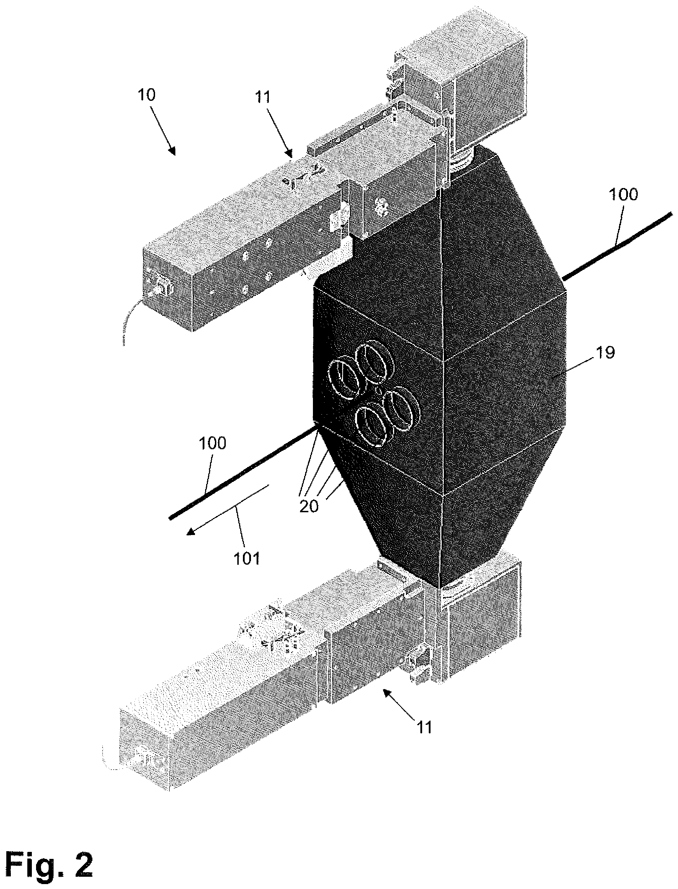

Während in Figur 1 eine Bearbeitungsvorrichtung 10 mit einer einzigen Erzeugungseinrichtung 11 dargestellt ist, weist das in Figur 2 dargestellte Ausführungsbeispiel zwei solcher Erzeugungseinrichtungen 11 auf, die jeweils oberhalb und unterhalb des Gehäuses 19 angeordnet sind. Die Erzeugungseinrichtungen 11 sind identisch wie die Erzeugungseinrichtung 11 in Figur 1 aufgebaut, so dass auf die entsprechenden Ausführungen verwiesen wird.

Wahrend bei dem Ausführungsbeispiel gemäß Figur 1 die von der Erzeugungseinrichtung 11 erzeugten Laserstrahlen nur aus einer Richtung, in diesem Fall von oben, in das Gehäuse 19 der Bearbeitungsvorrichtung 10 eingeleitet werden, werden die erzeugten Laserstrahlen im Ausführungsbeispiel der Figur 2 von zwei gegenüberliegenden Seiten, das heißt von oben und von unten, in das Gehäuse 19 der Bearbeitungsvorrichtung 10 eingeführt. Durch die in Figur 2 dargestellte Ausführungsform kann der Bearbeitungsprozess beschleunigt werden. Sowohl im Ausführungsbeispiel gemäß Figur 1 wie auch in dem gemäß Figur 2 kann eine Einleitung der erzeugten Laserstrahlen auch aus anderen vorteilhaften Richtungen wie beispielsweise seitlich erfolgen.

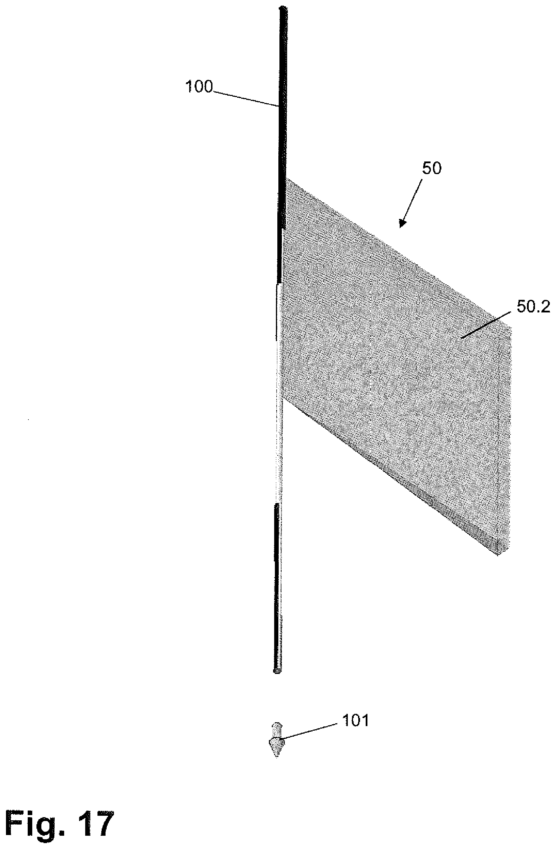

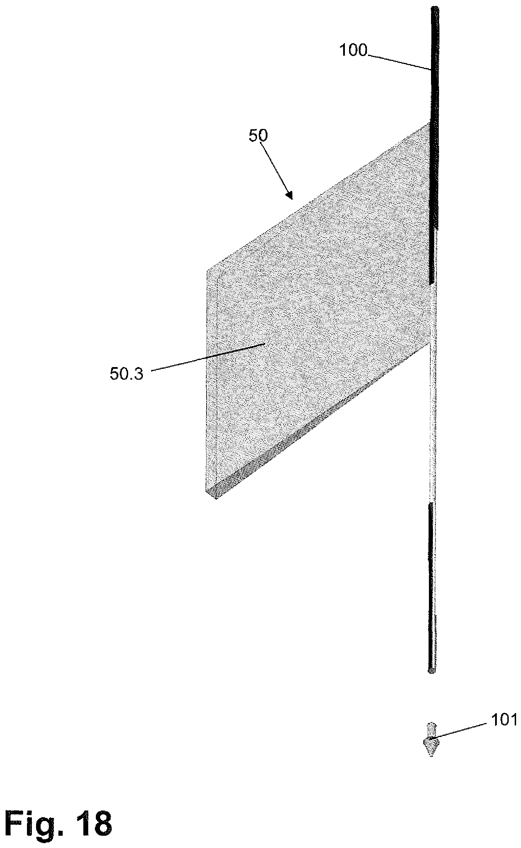

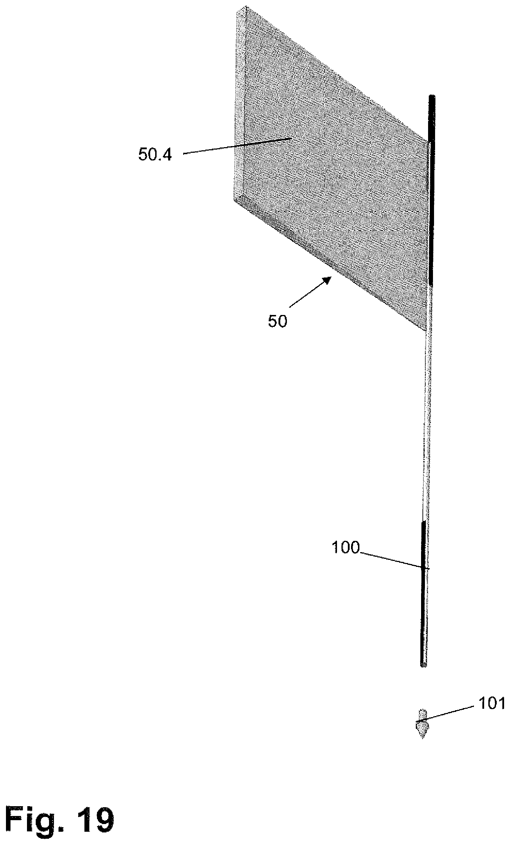

Im Folgenden wird in den Figuren 4 bis 19 eine Bearbeitungsvorrichtung 10 zugrunde gelegt, wie sie in Figur 1 dargestellt ist.

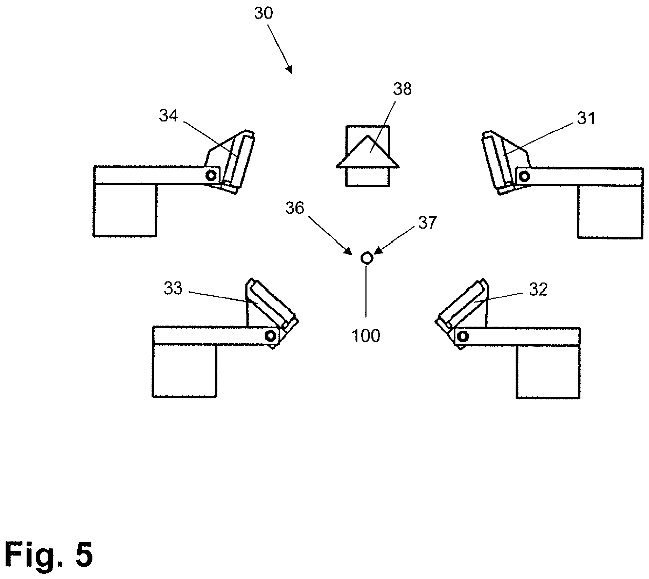

In den Figuren 4 und 5 sind zwei verschiedene Ansichten einer Einstrahleinrichtung 30 dargestellt, die Bestandteil der Bearbeitungsvorrichtung 10 ist, und die innerhalb des in den Figur 1 dargestellten Gehäuses 19 angeordnet ist.

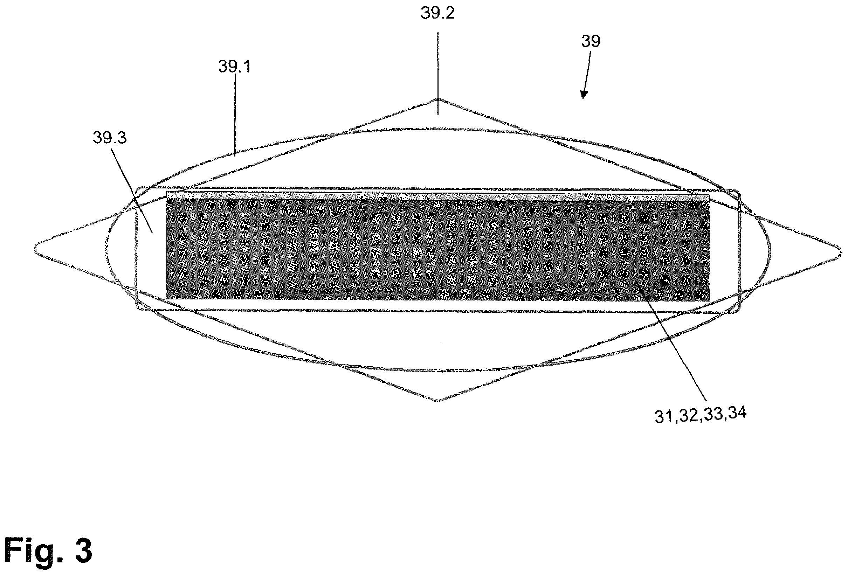

Die Einstrahleinrichtung 30 weist vier Spiegel 31, 32, 33, 34 auf, die als langgestreckte Spiegelelemente ausgebildet sind, und die beweglich innerhalb des Gehäuses angeordnet sind. Die vier Spiegel 31, 32, 33, 34 begrenzen die Bearbeitungszone 36 für den zu bearbeitenden Draht 100. Durch die Erzeugungseinrichtung 11, insbesondere durch die Scannereinrichtung, wird ein Arbeitsfeld 39 erzeugt, welches in Figur 3 dargestellt ist.

Figur 3 repräsentiert eine Draufsicht wahlweise auf einen der Spiegel 31, 32, 33 oder 34, und zwar in Strahlrichtung der Laserstrahlen gesehen aus Richtung von deren Austrittspunkt aus der Erzeugungseinrichtung. In Figur 3 ist das Arbeitsfeld 39 jeweils größer als der entsprechende Spiegel dimensioniert. Dies ist aber nicht zwingend vorgeschrieben. In der Figur 3 sind verschiedene bevorzugte Ausführungsformen von Arbeitsfeldern 39 dargestellt. Bevorzugt kann das Arbeitsfeld 39 als ein elliptisches Arbeitsfeld 39.1, oder als ein rautenförmiges Arbeitsfeld 39.2, oder als ein rechteckiges Arbeitsfeld 39.3 ausgebildet sein. Bei einer "rautenförmigen" Bearbeitung kann die mögliche Bearbeitungslänge des Lasers mit konventionellen Scannereinrichtungen um etwa 40 % gesteigert werden. Hierzu ist es notwendig die Steuerung der Scannereinrichtung so anzupassen und zu synchronisieren, dass die Ablenkung der Laserstrahlen in Richtung der Diagonalen der Scannereinrichtung verläuft.

Der Draht 100 wird in Vorschubrichtung 101 durch die Bearbeitungsvorrichtung10 hindurchbewegt. Die von der Erzeugungseinrichtung 11 über den Austrittspunkt 18 austretenden Laserstrahlen 50 werden nacheinander in einer vorgegebenen Bearbeitungsreihenfolge über die Spiegel 31, 32, 33, 34 in Richtung der Bearbeitungszone 36 gelenkt und in einer Fokuszone 37, die mit der Bearbeitungszone 36 zusammenfällt, fokussiert. Der Fokus 35 der einzelnen Laserstrahlen 50 befindet sich in der Fokuszone 37, die abhängig von der jeweiligen Bauteilgeometrie wahlweise punktförmig, linienförmig, ringförmig oder zylinderförmig oder auch anderweitig vorteilhaft ausgebildet ist. Bevorzugt bei der vorliegenden Erfindung ist es, wenn die Strahlwege der verschiedenen Laserstrahlen 50 aus den verschiedenen Einstrahlrichtungen von dem Austrittspunkt 18 der Erzeugungseinrichtung 11 über die einzelnen Spiegel 31, 32, 33, 34 zu dem jeweiligen Fokus 35 der Laserstrahlen 50 jeweils gleich lang sind. Aus diesem Grund ist ein dreieckiges Weg-Kompensationselement 38 in dem Gehäuse der Bearbeitungsvorrichtung 10 angeordnet. Das Weg-Kompensationselement 38 liegt auf der Mittelachse des Arbeitsfeldes.

Wenn unterschiedlich dimensionierte Werkstücke, beispielsweise Drähte 100 mit unterschiedlichen Durchmessern oder Rohre mit unterschiedlichen Durchmessern, nacheinander mit der Bearbeitungsvorrichtung bearbeitet werden sollen, ist dies mittels der erfindungsgemäßen Bearbeitungsvorrichtung 10 problemlos und einfach möglich. Insbesondere mittels des in Figur 1 dargestellten Moduls 15, durch das die Laserstrahlen in Z-Richtung das heißt der Fokuslänge abgelenkt werden, kann realisiert werden, dass die Strahlwege der Laserstrahlen 50 aus allen verschiedenen Einstrahlrichtungen von dem Austrittspunkt 18 der Erzeugungseinrichtung 11 über die einzelnen Spiegel 31, 32, 33, 34 zu dem jeweiligen Fokus 35 der Laserstrahlen 50 einheitlich und simultan eingestellt werden.

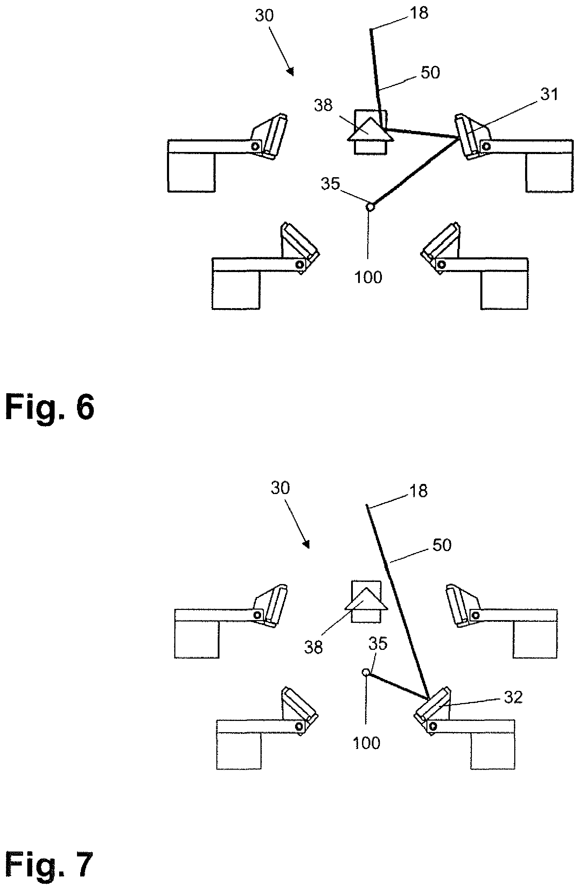

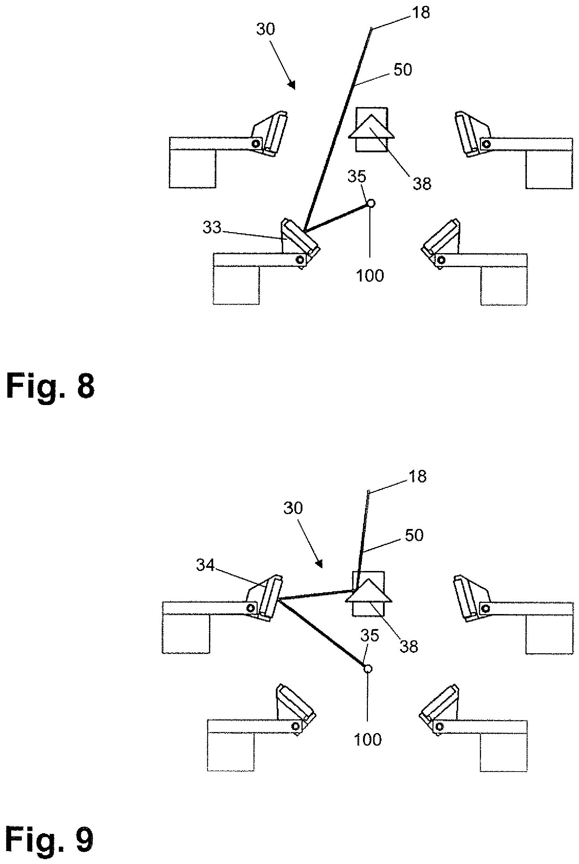

Anhand der Figuren 6 bis 9 wird nun der Ablauf des Verfahrens zur Bearbeitung des Drahtes 100 anhand eines bevorzugten Ausführungsbeispiels beschrieben. Dabei wird der Draht 100, der bearbeitet werden soll, von verschiedenen Seiten, vorzugsweise allseitig, mit Laserstrahlen 50 bestrahlt. Bei der Bearbeitung des Drahtes 100 werden die Laserstrahlen 50 aus verschiedenen Einstrahlrichtungen in einer vorgegebenen Reihenfolge auf die Spiegel 31, 32, 33, 34 gelenkt. Bei diesem Ausführungsbeispiel ist eine Reihenfolge gewählt, bei der die Laserstrahlen 50 zunächst auf den Spiegel 31 gelenkt werden (Figur 6), danach auf den Spiegel 32 (Figur 7), anschließend auf den Spiegel 33 (Figur 8) und schließlich auf den Spiegel 34 (Figur 9). Dadurch wird eine Optimierung der nutzbaren Bearbeitungslänge in Vorschubrichtung 101 des Drahtes 100 bei dem gewählten Arbeitsfeld erreicht. Genauso realisiert werden kann natürlich auch eine spiegelverkehrte Spiegelreihenfolge: 34 - 33 - 32 - 31.

In Figur 6 werden die erzeugten Laserstrahlen 50 vom Austrittspunkt 18 der Erzeugungseinrichtung über den ersten Spiegel 31, in Vorschubrichtung 101 des Drahtes 100 gesehen, wie dies in Figur 4 dargestellt ist, oben rechts in die Bearbeitungszone, in der sich der zu bearbeitende Draht 100 befindet, gelenkt. Die Laserstrahlen 50 sind in der Fokuszone fokussiert, das heißt, der Fokus 35 der Laserstrahlen 50 liegt auf der Oberfläche des zu bearbeitenden Drahtes 100.

In Figur 7 werden die erzeugten Laserstrahlen 50 vom Austrittspunkt 18 der Erzeugungseinrichtung über den zweiten Spiegel 32, in Vorschubrichtung 101 des Drahtes 100 gesehen, wie dies in Figur 4 dargestellt ist, unten rechts in die Bearbeitungszone gelenkt und in entsprechender Weise auf der Oberfläche des Drahtes 100 fokussiert.

Damit die Strahlwege der beiden Laserstrahlen 50 in beiden Fällen gleich lang sind, werden die Laserstrahlen, die über den ersten Spiegel 31 gelenkt werden, wie dies in Figur 6 dargestellt ist, zusätzlich über das Weg-Kompensationselement 38 gelenkt.

Der in Figur 6 dargestellte Strahlweg der Laserstrahlen 50 verläuft somit vom Austrittspunkt 18 der Erzeugungseinrichtung zunächst auf das Weg-Kompensationselement 38, wo die Laserstrahlen 50 von einer Seitenfläche des Weg-Kompensationselements 38 auf den Spiegel 31 gelenkt und von dort zum zu bearbeitenden Draht 100 reflektiert werden. Bei Figur 7 werden die Laserstrahlen 50 direkt zu dem zweiten Spiegel 32 gelenkt und von dort auf den zu bearbeitenden Draht 100 reflektiert. Wie man erkennt, werden die Laserstrahlen 50 über die Spiegel 31, 32 in verschiedenen Einstrahlrichtungen auf den Draht 100 eingestrahlt, so dass der Draht 100 in verschiedenen Bereichen bearbeitet wird.

In ähnlicher Weise erfolgt die Einstrahlung der Laserstrahlen 50 auf den Draht 100 über die Spiegel 33 und 34. Figur 8 zeigt den Strahlverlauf der Laserstrahlen 50 von dem Austrittspunkt 18 auf den Spiegel 33, in Vorschubrichtung 101 des Drahtes 100 gesehen, wie dies in Figur 4 dargestellt ist, unten links, von wo die Laserstrahlen 50 direkt auf den Draht 100 reflektiert werden. In Figur 9 ist die Situation dargestellt, in der die Laserstrahlen 50 von dem Austrittspunkt 18, wiederum über das Weg-Kompensationselement 38, zu dem vierten Spiegel 34, in Vorschubrichtung 101 des Drahtes 100 gesehen, wie dies in Figur 4 dargestellt ist, oben links gelenkt und von dort auf den zu bearbeitenden Draht 100 reflektiert werden.

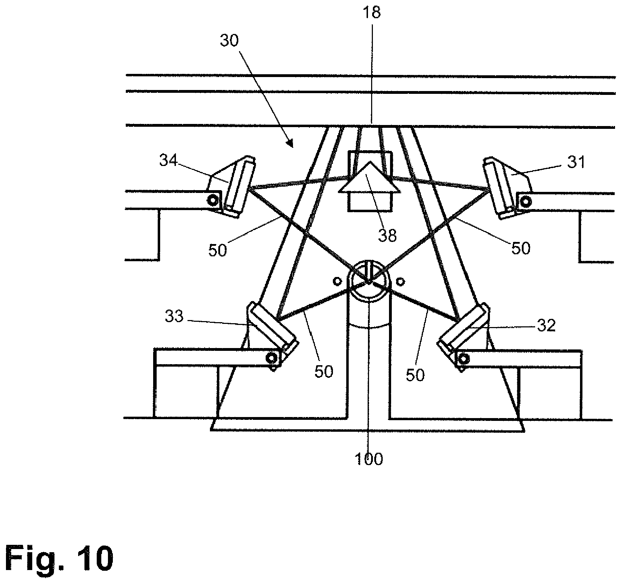

Wie insbesondere der Figur 10 zu entnehmen ist, die alle Strahlwege der Laserstrahlen 50 über die verschiedenen Spiegel 31, 32, 33, 34 gemeinsam zeigt, sind die Strahlwege der Laserstrahlen 50 über die oberen Spiegel 31, 34, wegen der Verwendung des Weg-Kompensationselements 38, gleich lang wie die Strahlwege der Laserstrahlen 50 über die unteren Spiegel 32, 33.

In den Figuren 6 bis 9 ist eine Ausführungsform einer bevorzugten Bearbeitungsreihenfolge über die Spiegel 31, 32, 33, 34 dargestellt. Selbstverständlich können in anderer Ausgestaltung auch andere Bearbeitungsreihenfolgen realisiert sein oder werden. Denkbar ist beispielsweise eine Bearbeitung in der Spiegelreihenfolge 32 - 31 - 34 - 33. Zwischen den einzelnen Spiegeln existieren dann die kleinstmöglichen Sprünge. Der einzig große Rücksprung wäre dann von Spiegel 33 auf Spiegel 32. Auch hier kann wie auch im schon vorgenannten Beispiel eine spiegelverkehrte Bearbeitungsreihenfolge realisiert werden.

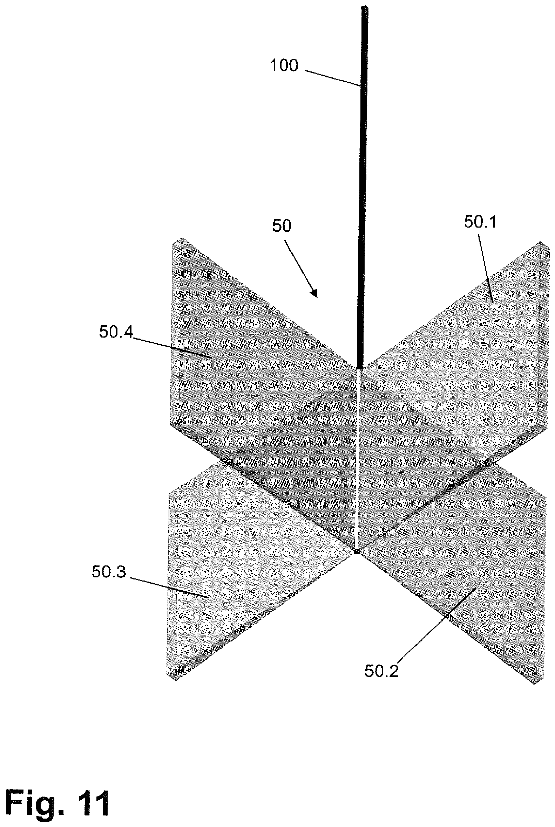

In Figur 11 ist der Ablauf des erfindungsgemäßen Verfahrens dargestellt, bei dem eine stationäre Bearbeitung des in der Bearbeitungsvorrichtung befindlichen Drahtes 100 erfolgt. Dabei wird eine Spiegelkonfiguration herangezogen, wie sie in den vorangegangenen Figuren dargestellt ist. Bei der stationären Bearbeitung ist der Draht 100 während der Bearbeitung stillstehend. Die von der Erzeugungseinrichtung erzeugten Laserstrahlen 50 werden nacheinander aus unterschiedlichen Einstrahlrichtungen auf den zu bearbeitenden Draht 100 gelenkt. Zunächst werden Laserstrahlen 50.1 über den Spiegel 31 (nicht dargestellt) auf die Oberfläche des Drahtes 100 gestrahlt. Danach werden Laserstrahlen 50.2 über den Spiegel 32 (nicht dargestellt) auf die Oberfläche des Drahtes 100 gelenkt. Anschließend werden Laserstrahlen 50.3 über den Spiegel 33 (nicht dargestellt) auf die Oberfläche des Drahtes 100 gestrahlt. Schließlich werden Laserstrahlen 50.4 über den Spiegel 34 (nicht dargestellt) auf die Oberfläche des Drahtes 100 gelenkt In der vereinfachten Darstellung der Figur 11 werden die Laserstrahlen gleichzeitig dargestellt. In der Realität werden die einzelnen Laserstrahlen bevorzugt zyklisch angesteuert, so dass immer nur Laserstrahlen aus einer Einstrahlrichtung gleichzeitig auf den Draht 100 einwirken. Nachdem die Bearbeitung aus allen Einstrahlrichtungen vollständig erfolgt ist, wird der Draht 100 aus der Bearbeitungszone entfernt, oder aber um die Länge der Bearbeitung nach vorne getaktet. Für die erneute Bearbeitung wird er dann wieder angehalten.

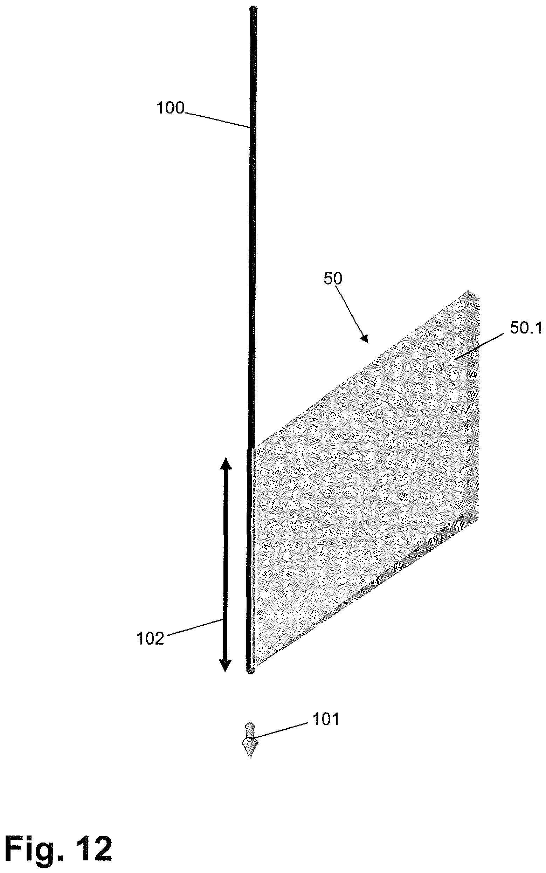

In den Figuren 12 bis 19 der Ablauf des erfindungsgemäßen Verfahrens dargestellt, bei dem eine kontinuierliche Bearbeitung des in der Bearbeitungsvorrichtung befindlichen Drahtes 100 erfolgt. Wiederum wird eine Spiegelkonfiguration herangezogen, wie sie in den vorangegangenen Figuren dargestellt ist Bei dieser Verfahrensausgestaltung lässt sich insbesondere eine kontinuierliche Bearbeitung des Werkstücks im Durchlauf realisieren, was auch als "On The Fly"-Bearbeitung bezeichnet wird. Das bedeutet, dass der Draht 100 in Vorschubrichtung 101 kontinuierlich durch die Bearbeitungsvorrichtung hindurchgeführt wird. Während sich der Draht 100 innerhalb der Bearbeitungsvorrichtung befindet, wird der Draht 100 mittels der Laserstrahlung bearbeitet. Bevorzugt werden dabei die erzeugten Laserstrahlen von der Erzeugungseinrichtung auf die verschiedenen Spiegel gelenkt und von dort, aus verschiedenen Richtungen, beispielsweise allseitig auf den zu bearbeitenden Draht 100 eingestrahlt.

Bei dieser Verfahrensvariante erfolgt die kontinuierliche Bearbeitung des Drahtes 100 mit folgenden Schritten:
Der Draht 100 wird mit gleichbleibender Geschwindigkeit in Vorschubrichtung 101 kontinuierlich durch die Bearbeitungsvorrichtung gefördert.

Die erzeugten Laserstrahlen 50 wirken zunächst aus einer ersten Einstrahlrichtung in Form von Laserstrahlen 50.1 über den Spiegel 31 (nicht dargestellt) auf den Draht 100 ein und bearbeiten dort auf voller, das heißt auf größtmöglicher Bearbeitungslänge. Dies ist in Figur 12 dargestellt.

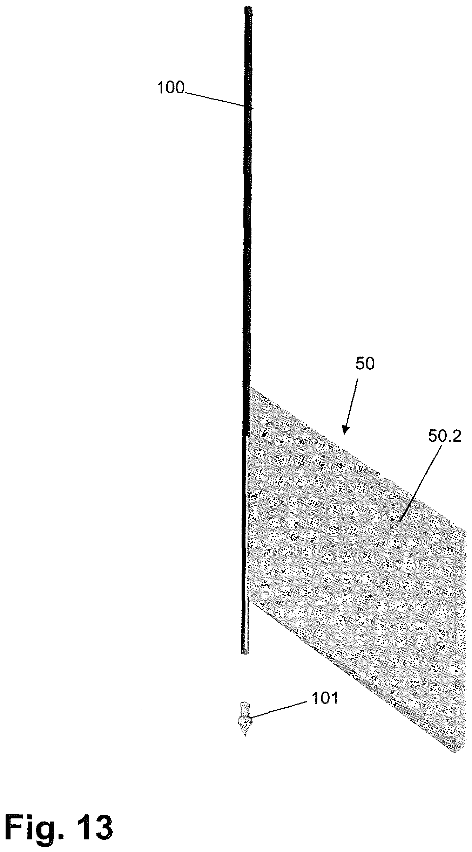

Nachdem das entsprechende Drahtsegment mit Laserstrahlen komplett bearbeitet ist, wird die Bearbeitung auf Laserstrahlen 50.2 aus einer nächsten, zweiten Einstrahlrichtung umgeschaltet, wobei die Laserstrahlen in diesem Fall über den Spiegel 32 (nicht dargestellt) eingestrahlt wurden. Dies ist in Figur 13 dargestellt. Die Laserstrahlen wirken aus der zweiten Einstrahölrichtung auf den zu bearbeitenden Draht 100 ein

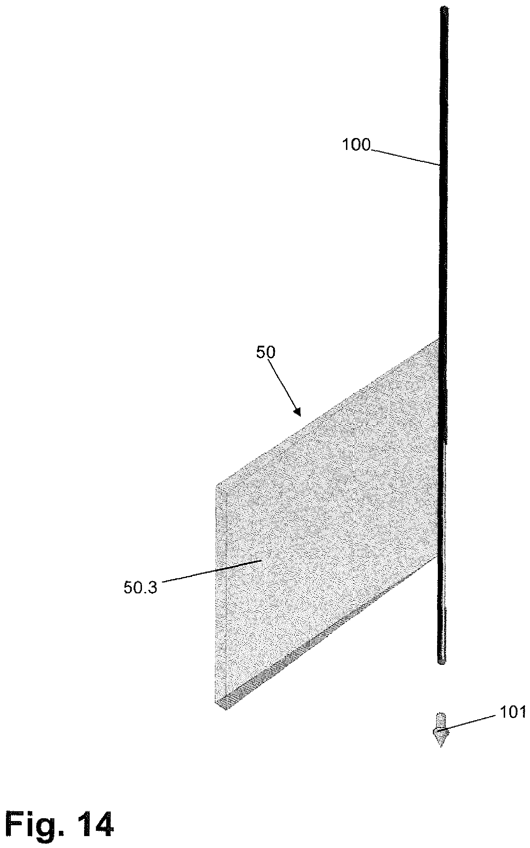

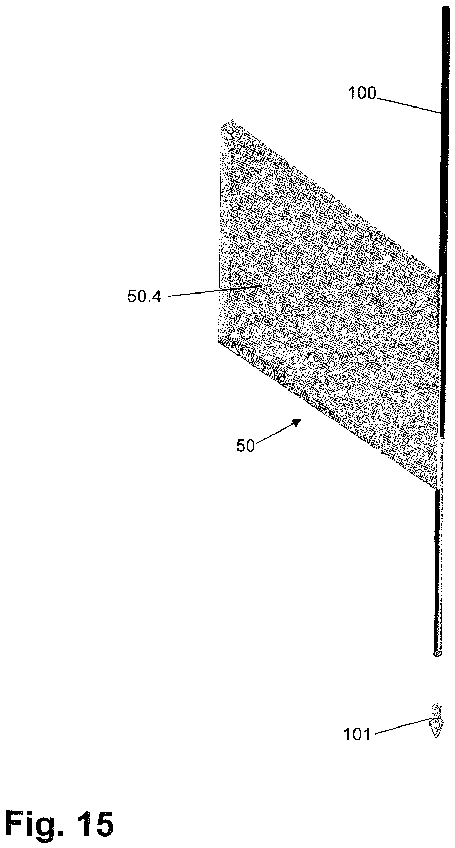

Die Bestrahlung wird anschließend fortgeführt, bis die komplette Oberfläche, beispielsweise der Außenumfang des Drahts 100, aus den unterschiedlichen Einstrahlrichtungen einmal komplett rundherum bearbeitet wurde. Bei vier Spiegeln bedeutet dies, dass eine entsprechende Bestrahlung noch aus einer dritten Einstrahlrichtung erfolgt, bei der Laserstrahlen 50.3 über den Spiegel 33 (nicht dargestellt) eingestrahlt werden (Figur 14), sowie aus einer vierten Einstrahlrichtung, bei der die Laserstrahlen 50.4 über den Spiegel 34 (nicht dargestellt) eingestrahlt werden (Figur 15).

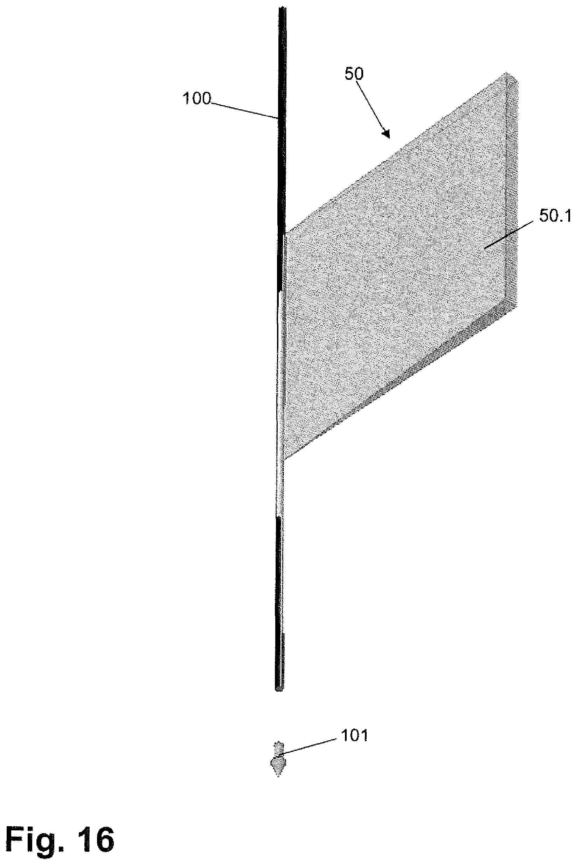

Anschließend beginnt der Umlauf von neuem. In den Figuren 16 bis 19 ist in Anlehnung an die Figuren 12 bis 15 exemplarisch ein zweiter Umlauf dargestellt.

In den Figuren 12 bis 19 ist zu Veranschaulichungszwecken des Verfahrens dargestellt, dass die Laserstrahlen entlang des Drahtes 100 wandern und dass der Draht 100 stationär verbleibt. In der Realität ist es jedoch so, dass sich der Draht 100 mit einer Vorschubgeschwindigkeit in Vorschubrichtung 101 bewegt, und dass die Laserstrahlen während eines Umlaufs stets an gleicher Position auf den Draht 100 auftreffen und insoweit selbst nicht wandern. Die Positionierung der Laserstrahlen über die Spiegel auf der Oberfläche des Drahtes 100 entspricht somit der Positionierung, wie sie in Figur 11 im Hinblick auf die stationäre Bearbeitung dargestellt ist.

Die Vorschubgeschwindigkeit des Drahtes 100 wird bevorzugt exakt so eingestellt, dass dieser für einen "kompletten Umlauf", das heißt eine vollständige Laserbearbeitung aus allen Einstrahrichtungen, genau um die, insbesondere eingestellte, Bearbeitungslänge der Erzeugungseinrichtung weiter transportiert wird. Diese Bearbeitung wird auch "On-The-Fly" genannt und erlaubt eine vollflächige Bearbeitung ohne zwischenzeitliches Anstoppen des Werkstücks. Hierdurch Entfallen unproduktive Nebenzeiten.

Das erfindungsgemäße Verfahren zeichnet sich unter Bezugnahme auf die verschiedenen Figuren dadurch aus, dass über die Erzeugungseinrichtung 11 der Bearbeitungsvorrichtung 10 zunächst Laserstrahlen 50 beziehungsweise 50.1, 50.2, 50.3, 50.4 erzeugt werden. Die erzeugten Laserstrahlen werden über die Spiegel 31, 32, 33, 34 aus mehreren unterschiedlichen Einstrahlrichtungen wahlweise oder in einer vorgegebenen Bearbeitungsreihenfolge über die Spiegel 31, 32, 33, 34 in die Bearbeitungszone 36 eingestrahlt und in einer insbesondere punktförmigen, linienförmigen, ringförmigen oder zylinderförmigen oder anderweitig vorteilhaften Fokuszone 37, die mit der Bearbeitungszone 36 korrespondiert, fokussiert. Dabei liegt der Fokus 35 der einzelnen Laserstrahlen 50 jeweils in der Fokuszone 37. Bevorzugt werden die erzeugten Laserstrahlen 50 nacheinander über unterschiedliche Spiegel 31, 32, 33, 34 in die Bearbeitungszone 36 eingestrahlt. Die Spiegel 31, 32, 33, 34 sind im Strahlweg der Laserstrahlen 50 zwischen dem Austrittspunkt 18 der Laserstrahlen aus der wenigstens einen Erzeugungseinrichtung 11 und der Fokuszone 37, beziehungsweise dem Fokus 35 der Laserstrahlen 50, angeordnet, In jeder Einstrahlrichtung wird der Strahlweg der Laserstrahlen 50 zwischen dem Austrittspunkt 18 der Laserstrahlen über jeden der Spiegel 31, 32, 33, 34 zum Fokus 35 der Laserstrahlen 50 bevorzugt gleich lang eingestellt.

Die Laserstrahlen 50 werden in einer festgelegten Reihenfolge nacheinander auf die verschiedenen Spiegel 31, 32, 33, 34 gelenkt, wobei die Reihenfolge variieren kann. Von dort werden die Laserstrahlen 50 in Richtung der Bearbeitungszone 36 reflektiert und treffen dort auf das zu bearbeitende Werkstück, beispielsweise den zu bearbeitenden Draht 100, auf. Durch die entsprechende Ausgestaltung der Strahlwege, die vorzugsweise alle gleich lang sind, ist sichergestellt, dass alle Laserstrahlen 50 auf der Oberfläche des Werkstücks, beispielsweise auf der Oberfläche des Drahtes 100, fokussiert sind. Dort, wo es erforderlich ist, werden die Laserstrahlen 50 über das Weg-Kompensationselement 38 gelenkt, damit alle Strahlwege der Laserstrahlen 50 über die verschiedenen Spiegel 31, 32, 33, 34 gleich lang sind. Die einzelnen Spiegel 31, 32, 33, 34 können individuell und unabhängig voneinander einzeln eingestellt werden, insbesondere hinsichtlich ihres Winkels und ihrer Position. Ebenso können die über die einzelnen Spiegel 31, 32, 33, 34 in den verschiedenen Einstrahlrichtungen verlaufenden Laserstrahlen 50.1, 50.2, 50.3, 50.4 individuell und unabhängig von anderen Laserstrahlen eingestellt werden, insbesondere hinsichtlich deren Strahlparametern.

Mit dem erfindungsgemäßen Verfahren lässt sich insbesondere eine allseitige Bearbeitung des Werkstücks, beispielsweise des Drahtes 100, realisieren. Dabei lässt sich insbesondere eine kontinuierliche Bearbeitung des Werkstücks, beispielsweise des Drahtes 100, im Durchlauf realisieren, wobei das Werkstück, beispielsweise der der Draht 100, kontinuierlich durch die Bearbeitungsvorrichtung 10 hindurchgeführt wird. Ebenso ist eine getaktete Bearbeitung realisierbar. Während sich das Werkstück, beispielsweise der Draht 100, innerhalb der Bearbeitungsvorrichtung 10 befindet, wird das Werkstück, beispielsweise der Draht 100, mittels der Laserstrahlung bearbeitet, indem die erzeugten Laserstrahlen 50.1, 50.2, 50.3, 50.4 von der Erzeugungseinrichtung 11 nacheinander auf die verschiedenen Spiegel 31, 32, 33, 34 gelenkt und von dort, aus verschiedenen Richtungen, beispielsweise allseitig auf das zu bearbeitende Werkstück, beispielsweise auf den zu bearbeitenden Draht 100, eingestrahlt werden.

### Bezugszeichenliste

- 10: Bearbeitungsvorrichtung
- 11: Erzeugungseinrichtung
- 12: Teil einer Laserquelle
- 13: Scannereinrichtung
- 14: Lasermimik
- 15: Modul zur Ablenkung des Laserstrahls in Z-Richtung
- 16: Objektivelement
- 17: Ausgangsseite des Objektivelements
- 18: Austrittspunkt
- 19: Gehäuse
- 20: Anschluss für Absaugvorrichtung

- 30: Einstrahleinrichtung
- 31: Spiegel
- 32: Spiegel
- 33: Spiegel
- 34: Spiegel
- 35: Fokus der Laserstrahlen
- 36: Bearbeitungszone
- 37: Fokussierzone
- 38: Weg-Kompensationselement
- 39: Arbeitsfeld
- 39.1: Elliptisches Arbeitsfeld
- 39.2: Rautenförmiges Arbeitsfeld
- 39.3: Rechteckiges Arbeitsfeld

- 50: Laserstrahlen
- 50.1: Laserstrahlen
- 50.2: Laserstrahlen
- 50.3: Laserstrahlen
- 50.4: Laserstrahlen

- 100: Draht
- 101: Vorschubrichtung
- 102: Bearbeitungslänge

## Patentansprüche

1. Bearbeitungsvorrichtung (10) für die Bearbeitung eines Werkstücks (100) mittels Laserstrahlung, aufweisend wenigstens eine Erzeugungseinrichtung (11) zum Erzeugen von Laserstrahlen (50), eine der wenigstens einen Erzeugungseinrichtung (11) zugeordnete Einstrahleinrichtung (30) zum Einstrahlen der erzeugten Laserstrahlen (50) aus mehreren unterschiedlichen Einstrahlrichtungen in eine Bearbeitungszone (36), welche zur Aufnahme des zu bearbeitenden Werkstücks (100) ausgebildet ist, wobei die Einstrahleinrichtung (30) bereitgestellt ist, dass der Fokus (35) der aus den unterschiedlichen Einstrahlrichtungen eingestrahlten Laserstrahlen (50) in einer Fokuszone (37) liegt, welche mit der Bearbeitungszone (36) korrespondiert, **dadurch gekennzeichnet, dass** die Einstrahleinrichtung (30) eine Anzahl von Spiegeln (31, 32, 33, 34) aufweist, welche zur Einstrahlung der Laserstrahlen (50) in den unterschiedlichen Einstrahlrichtungen bereitgestellt sind, dass die Spiegel (31, 32, 33, 34) im Strahlweg der Laserstrahlen (50) zwischen einem Austrittspunkt (18) der Laserstrahlen (50) aus der wenigstes einen Erzeugungseinrichtung (11) und dem Fokus (35) der Laserstrahlen (50) angeordnet sind, und dass die wenigstens eine Erzeugungseinrichtung (11) ausgebildet ist, um die erzeugten Laserstrahlen (50) wahlweise oder in einer vorgegebenen Bearbeitungsreigenfolge über die Spiegel (31, 32, 33, 34) in die Bearbeitungszone (36) einzustrahlen.

2. Bearbeitungseinrichtung nach Anspruch 1, **dadurch gekennzeichnet, dass** der Strahlweg der Laserstrahlen (50) zwischen dem Austrittspunkt (18) der Laserstrahlen (50) über jeden der Spiegel (31, 32, 33, 34) zum Fokus (35) der Laserstrahlen (50) jeweils gleich lang ist.

3. Bearbeitungsvorrichtung nach Anspruch 1 oder 2, **dadurch gekennzeichnet, dass** die Bearbeitungsvorrichtung (10) ein definiertes Arbeitsfeld (39), insbesondere ein elliptisches (39.1) oder rautenförmiges (39.2) oder rechteckiges (39.3) Arbeitsfeld aufweist, und/oder dass die Spiegel (31, 32, 33, 34) insbesondere außenliegend zur Bearbeitungszone (36) in der Bearbeitungsvorrichtung (10) angeordnet sind.

4. Bearbeitungsvorrichtung nach einem der Ansprüche 1 bis 3, **dadurch gekennzeichnet, dass** die wenigstens eine Erzeugungseinrichtung (11) eine Laserquelle (12) zur Erzeugung der Laserstrahlen (50), und optional eine Scannereinrichtung (13) und/oder ein Objektivelement (16), vorzugsweise mit wenigstens einer Fokussierlinse, aufweist.

5. Bearbeitungsvorrichtung nach einem der Ansprüche 1 bis 4, **dadurch gekennzeichnet, dass** zumindest einzelne Spiegel (31, 32, 33, 34) fest oder einstellbar beweglich in der Bearbeitungsvorrichtung (10) angeordnet sind.

6. Bearbeitungsvorrichtung nach einem der Ansprüche 1 bis 5, **dadurch gekennzeichnet, dass** die wenigstens eine Erzeugungseinrichtung (11) ausgebildet ist, dass sie in der Lage ist, die Länge des Arbeitsbereichs in der Bearbeitungszone (36) einzustellen und/oder für eine Variation der Brennweite den Fokusabstand der Laserstrahlen (50) zwischen dem Austrittspunkt (18) und der Fokuszone (37) zu verstellen und/oder den Verlauf der erzeugten Laserstrahlen (50) in der X-Richtung und/oder der Y-Richtung und/oder der Z-Richtung zu verändern.

7. Bearbeitungsvorrichtung nach einem der Ansprüche 1 bis 6, **dadurch gekennzeichnet, dass** die Einstrahleinrichtung (30) vier Spiegel (31, 32, 33, 34) zum Einstrahlen der erzeugten Laserstrahlen (50) aus vier unterschiedlichen Einstrahlrichtungen in die Bearbeitungszone (36) aufweist.

8. Bearbeitungsvorrichtung nach einem der Ansprüche 1 bis 7, **dadurch gekennzeichnet, dass** die Bearbeitungsvorrichtung (10) eine einzige Erzeugungseinrichtung (11) aufweist, und dass alle Spiegel (31, 32, 33, 34) der Einstrahleinrichtung (30) der Erzeugungseinrichtung (11) zugeordnet sind, oder dass die Bearbeitungsvorrichtung (10) zwei Erzeugungseinrichtungen (11) aufweist, und dass jeder Erzeugungseinrichtung (11) jeweils eine Teilanzahl der Spiegel (31, 32, 33, 34) zugeordnet ist.

9. Bearbeitungsvorrichtung nach einem der Ansprüche 1 bis 8, **dadurch gekennzeichnet, dass** in wenigstens einem Strahlweg der Laserstrahlen (50) zwischen dem Austrittspunkt (18) der Laserstrahlen (50) aus der Erzeugungseinrichtung (11) über den Spiegel (31; 34) zum Fokus (35) der Laserstrahlen (50) vor dem Spiegel (31; 34) wenigstens ein Weg-Kompensationselement (38) angeordnet ist.

10. Bearbeitungsvorrichtung nach einem der Ansprüche 1 bis 9, **dadurch gekennzeichnet, dass** die Bearbeitungsvorrichtung (10) für eine statische Bearbeitung des Werkstücks (100) oder für eine Bearbeitung des Werkstücks (100) im Durchlauf oder für eine getaktete Bearbeitung ausgebildet ist.

11. Bearbeitungsvorrichtung nach einem der Ansprüche 1 bis 10, **dadurch gekennzeichnet, dass** die Bearbeitungsvorrichtung (10) eine Absaugvorrichtung aufweist, die bereitgestellt ist, um mittels der Laserstrahlen (50) vom zu bearbeitenden Werkstück (100) abgelöste Partikel abzusaugen.

12. Bearbeitungsvorrichtung nach einem der Ansprüche 1 bis 11, **dadurch gekennzeichnet, dass** die Bearbeitungsvorrichtung (10) eine Schutzvorrichtung für die Spiegel (31, 32, 33, 34) aufweist, und dass die Schutzvorrichtung insbesondere als wenigstens ein vor dem Spiegel (31, 32, 33, 34) platziertes Schutzglas und/oder als Einrichtung zur Erzeugung von Druckluft ausgebildet ist.

13. Verfahren zum Bearbeiten eines Werkstücks mittels Laserstrahlung, wobei das zu bearbeitende Werkstück in einer Bearbeitungszone einer Bearbeitungsvorrichtung aufgenommen wird, **gekennzeichnet durch** folgende Schritte.
a) über wenigstens eine Erzeugungseinrichtung der Bearbeitungsvorrichtung werden Laserstrahlen erzeugt;
b) über wenigstens eine der wenigstens einen Erzeugungseinrichtung zugeordnete Einstrahleinrichtung, welche eine Anzahl von Spiegeln aufweist, werden die erzeugten Laserstrahlen aus mehreren unterschiedlichen Einstrahlrichtungen wahlweise oder in einer vorgegebenen Bearbeitungsreihenfolge über die Spiegel in die Bearbeitungszone eingestrahlt und in einer Fokuszone, die mit der Bearbeitungszone korrespondiert, fokussiert, wobei die Spiegel im Strahlweg der Laserstrahlen zwischen dem Austrittspunkt der Laserstrahlen aus der wenigstens einen Erzeugungseinrichtung und dem Fokus der jeweiligen Laserstrahlen angeordnet sind.

14. Verfahren nach Anspruch 13, **dadurch gekennzeichnet, dass** in jeder Einstrahlrichtung der Strahlweg der Laserstrahlen zwischen dem Austrittspunkt der Laserstrahlen über jeden der Spiegel zum Fokus der Laserstrahlen jeweils gleich lang eingestellt wird.

15. Verfahren nach Anspruch 13 oder 14, **dadurch gekennzeichnet, dass** dieses unter Verwendung einer Bearbeitungsvorrichtung nach einem der Ansprüche 1 bis 12 durchgeführt wird.
